# EUROPÄISCHE PATENTSCHRIFT

(11) **EP 2 146 818 B1**
(45) Veröffentlichungstag und Bekanntmachung des Hinweises auf die Patenterteilung: **26.12.2012**
(21) Anmeldenummer: 08735337.1
(22) Anmeldetag: 19.04.2008
(51) Int. Cl.: B23Q 1/01, B23Q 3/10, E04B 1/19, B21J 15/10

(54) **MODULARER WERKZEUGHALTER**
MODULAR TOOL HOLDER
PORTE-OUTIL MODULAIRE

(30) Priorität: 26.04.2007 DE 102007020167
(43) Veröffentlichungstag der Anmeldung: 27.01.2010
(73) Patentinhaber: Robert Bosch GmbH, 70469 Stuttgart (DE)
(72) Erfinder: PHILIPSKÖTTER, Andre, 64720 Michelstadt / Weiten-Gesäss (DE)
(74) Vertreter: Thürer, Andreas
(86) Internationale Anmeldenummer: PCT/EP2008/003165
(87) Internationale Veröffentlichungsnummer: WO 2008/131880

(56) Entgegenhaltungen:
- WO-A-00/02701
- DE-A1- 19 833 125
- GB-A- 889 567

## Beschreibung

Die Erfindung betrifft einen Werkzeughalter nach dem Oberbegriff des Anspruchs 1.

Solche Werkzeughalter sind - z. B. als Zangen - insbesondere für Anlagen für umformtechnische Fügeprozesse, insbesondere Clinchen und Stanznieten, sowie für thermische Fügeprozesse wie Widerstandspunktschweißen, Handlings- oder Montageprozesse, Prägeprozesse, Schraub- und Einpressprozesse bekannt.

Im Falle des Widerstandspunktschweißens bedeutet dies, dass es in der Regel eine Vielzahl von zu bearbeitenden, d. h. mittels Schweißpunkten zu verbindenden Werkstücken/-konturen gibt. Daher gibt es Schweißzangen der eingangs genannten Art als Werkzeughalter, die an zu verbindende Werkstückkonturen (bzw. Bauteilgeometrien und Zugänglichkeiten der Werkzeuge zur Füge-/Montagestelle) angepasst sind. Je nach Schweißaufgabe gibt es unterschiedliche bzw. vielfältigste Anforderungen an die Fügezange, wie zum Beispiel Schweiß- und Kraftprofil oder aber die Zugänglichkeit der Fügezange an die zu verschweißende Stelle beispielsweise im Automobil-/Karosserierohbau. Für verschiedene Arbeitsaufgaben gibt es in der Regel eine große Vielzahl von unterschiedlichen Zangen mit an die Schweißaufgabe angepasster Zangengeometrie. Aufgrund der stark voneinander abweichenden Anforderungen an die Auslegung der Zange und der hohen Variabilität der Anforderungen zum Teil je Fügepunkt/Schweißaufgabe innerhalb einer Schweißzange/je Schweißzange/je Aufgabenbereich einer Schweißzange/je Fügespektrum einer Schweißzange sind solche Zangen in der Regel aber nur unzureichend an die jeweiligen, unterschiedlichen, individuellen, mechanischen Anforderungen angepasst, z. B. in Bezug auf das Nachsetzverhalten, die Masse oder das Verformungsverhalten der Schweißzange unter der wirkenden Elektrodenkraft/Anpreßkraft. Oft wird eine Zange nur für den gerade relevanten, konkreten Anwendungsfall dimensioniert, d.h. zum Beispiel für bestimmte zulässige Elektrodenkräfte (z.B. bis 5kN) ausgelegt. Diese Systeme sind nicht ohne weiteres/ohne größeren Umrüstaufwand bzw. zum Teil neue Berechnungen/Konstruktion an neue, auch höhere Ansprüche wie beispielsweise Elektrodenkräfte von bis zu 8kN, umzustellen. Andererseits bedeutet die Verwendung bestehender Zangen Nachteile für das Schweißergebnis durch die höheren Anforderungen der jeweiligen Material-Werkstoffkombination (Elektrodenkraft, Werkzeuggenauigkeit/-versätze, Aufbiegung, Nachsetzverhalten...) bzw. das nicht angepaßte mechanische Verhalten der Zange.

Die DE 198 33 125 A1 beschreibt ein Flächenportalsystem für Bearbeitungs-, Montage- und Handhabungsaufgaben.

Die GB 889 567 A befasst sich mit einer Raketenpresse.

Die WO 00/02701 A auf der den Oberbegriff des Anspruchs 1 basiert beschreibt einen Werkzeughalter mit einem im wesentlichen C-förmigen Rahmen, der ausgebildet ist, um an seinem freien Ende ein Werkzeug, beispielsweise eine Niet-, Klebe- oder Schweißeinheit, zu tragen. Der Werkzeughalter umfasst eine Rahmen- oder Fachwerkkonstruktion, die einen äußeren und einen inneren C-förmigen Rahmen und eine Reihe von mit diesen verbundenen schwenkbaren Tragbügeln einschließt.

Es ist daher Aufgabe der vorliegenden Erfindung, einen Werkzeughalter der eingangs genannten Art der Art weiterzubilden, dass er vergleichsweise leicht aufgebaut sein kann und dass die relativ leichte Bauweise (Gewicht und Struktur) für eine Vielzahl von unterschiedlichen Anforderungen an einen Werkzeughalter verfügbar gemacht werden kann. Zusätzlich ist es Aufgabe der vorliegenden Erfindung, einen Werkzeughalter der eingangs genannten Art einfacher und flexibler herstellbar auszugestalten und/oder hinsichtlich der Konfigurierbarkeit flexibler im Hinblick auf die Anpassung an eine vorhandene Werkstück-Bearbeitungsaufgabe/Schweißaufgabe anpassen zu können.

Diese Aufgabe wird gelöst durch die Merkmale des Anspruchs 1.

Es ist eine Erkenntnis der Erfindung, dass eine im Prinzip leicht bauende und/oder einfach aufgebaute Fachwerkstruktur, insbesondere mit geringem Gewicht, für eine Vielzahl von unterschiedlichen Anforderungen individuell, mit geringem Aufwand und geringen (Herstell-)Kosten, flexibel und einfach hergestellt werden kann, wenn die Fachwerkstruktur in bestimmten, z.B. bezüglich des mechanischen, resultierenden Gesamtverhaltens maßgeblichen, Abschnitten, die zum Beispiel die mechanischen Eigenschaften maßgeblich bestimmen, modular aufgebaut und gleichzeitig die Module starr miteinander und eventuell mit Basisabschnitten des Werkzeughalters verbunden sind.

Der Werkzeughalter kann in zumindest einem Teilbereich, aber auch in zweien oder mehreren Teilbereichen, Module aufweisen. Der Teilbereich oder die Teilbereiche wird/werden unter der Betriebskraft elastisch mit verformt, so dass auf diese Weise durch die Anpassung der Geometrie, der Werkstoffauswahl und deren Eigenschaften, insbesondere der mechanischen Schnittstellen zwischen den einzelnen Komponenten oder dergleichen der Module die resultierenden Mechanikeigenschaften des Werkzeughalters designt oder mechanisch vorbestimmt oder eingestellt werden können. Bei einer Zange kann z. B. lediglich ein Zangenarm oder können beide Zangenarme als Module aufgebaut sein oder aus mehreren Modulen bestehen. Darauf wird weiter unten noch näher eingegangen.

Die Investitionskosten einer industriellen Anlage mit einem erfindungsgemäßen Werkzeughalter, z. B. einer Widerstandsschweißeinrichtung, werden gesenkt und eine flexible Produktion, z. B. nach Art eines standardisierten Baukastens, erreicht, wenn Module lösbar miteinander und/oder ein Modul lösbar mit Basisabschnitten des Werkzeughalters verbunden, insbesondere verschraubt oder verstiftet sind/ist. Dadurch wird ein Retooling/Reuse wahrscheinlicher. Im Ergebnis wird damit der Einsatz der erfindungsgemäßen Lösung rentabler für beispielsweise einen OEM oder Karosseriebauer in der Automobilindustrie.

Module können aber auch unlösbar miteinander und/oder ein Modul kann unlösbar mit Basisabschnitten des Werkzeughalters stoffschlüssig verbunden sein, insbesondere verklebt, verschweißt oder verlötet. Dann ist eine Leichtbauweise bei einfacher und flexibler Herstellung möglich, wobei der resultierende Werkzeughalter trotzdem eine hohe Steifigkeit bzw. Starrheit aufweisen kann. Im Prinzip kann der Bügel auch aus einem Vollmaterial bestehen ohne Schnittstellen zwischen den einzelnen Modulen. Er kann auch aus zwei übereinander angeordneten Blechen, mit oder ohne Fachwerkstruktur, bestehen. So kann es in Abhängigkeit beispielsweise der Einzel-/Gesamtblechstärke erforderlich sein, dass die Steifigkeit stärker oder weniger stark ausgeprägt ist und damit das mechanische Verhalten im Sinne der Aufbiegung und des Nachsetzverhaltens positiv/definiert beeinflusst/eingestellt wird. Wesentlich ist auch der Aspekt der eingestellten und/oder anpassbaren mechanischen Eigenschaften der Zange. Gleichzeitig können die gewünschten Gesamteigenschaften des Werkzeughalters bei der Auslegung eines z. B. modularisierten Baukastensystems im Vorfeld definiert und entsprechende Kombinationsvarianten vorgesehen werden. Im Prinzip kann der gesamte Bügel aus Vollmaterial aufgebaut sein, z.B. aus einem Vollmaterial ausgearbeitet, z.B. gefräst, sein. Darauf aufbauend kann z.B. durch zusätzliche Maschinenelemente (Federn, Dämpfer, Streben, Zylinder,...) das mechanische Verhalten einer Standardbasiszange verändert werden, so dass ein hoher Grad der Standardisierung erzielt werden kann.

Der Werkzeughalter zeigt unter der Belastung mit der Betriebskraft ein besonders reproduzierbares, mechanisches Verhalten, wenn er mit den verbundenen Modulen insgesamt praktisch eigensteif ausgebildet ist. Er kann im freitragenden Zustand unbelastet seine Form im wesentlichen bis vollständig beibehalten. Insoweit kann er steif oder starr ausgebildet sein. Die designte Zange weist unter der erfindungsgemäßen Auslegung des Bügels verbesserte Eigenschaften auf, die zu einem besseren, reproduzierbaren Schweißergebnis führen und höhere Standmengen aller beteiligten mechanischen Komponenten inklusive der Elektrodenkappen ermöglichen, weil eine günstigere bzw. gleichmäßigere Belastung/Lastverteilung der Einzelkomponenten erfolgt.

Eine genaue, zuverlässige, reproduzierbar vorbestimmte Funktion, insbesondere Positionierung und Führung eines gehaltenen Werkzeugs, wird dadurch erreicht, dass der Werkzeughalter mit den verbundenen Modulen eine derartige, resultierende Fachwerkstruktur aufweist, dass bezüglich zumindest eines Knotenbereiches zumindest eine Mittellinie eines in diesen Knotenbereich einmündenden Strebenelementes (z.B. eines Strebenelementes, dessen Wirklinien diesem Knotenbereich zuzuordnen oder zugeordnet sind) außermittig bezüglich des Knotenbereiches ausgerichtet ist und/oder der Schnittpunkt der Mittellinien zumindest zweier in diesen Knotenbereich einmündender Strebenelemente außermittig bezüglich des Knotenbereiches angeordnet ist, so dass eine unter der Verformung nach dem Stand der Technik entstehende Verkippung des Werkzeughaltebereichs gegenüber der unverformten Konfiguration durch die strukturelle resultierende außermittige Ausrichtung der geometrischen Strukturelemente, die ein Verformungsmoment verursacht, zumindest teilweise zu kompensieren ist.

Deswegen weist der Werkzeughalter mit den verbundenen Modulen eine derartige, resultierende Fachwerkstruktur auf, dass bezüglich zumindest eines Knotenbereiches zumindest eine Mittellinie oder ein Abschnitt einer Mittellinie eines in diesen Knotenbereich einmündenden Strebenelementes außermittig bezüglich des Knotenbereiches ausgerichtet ist und/oder der Schnittpunkt der Mittellinien oder von Abschnitten der Mittellinien-zumindest zweier in diesen Knotenbereich einmündender Strebenelemente außermittig bezüglich des Knotenbereiches angeordnet ist, so dass die strukturelle, resultierende außermittige Ausrichtung der geometrischen Strukturelemente durch die, insbesondere innere, Momentenverteilung unter der Einwirkung der Betriebskraft die Verformung der resultierenden Fachwerkstruktur im Sinne einer konstanten Ausrichtung des Werkzeughaltebereiches beeinflusst.

Die Auslegung nach dieser "Ausrichtungsstruktur" kann nach im Stand der Technik durchweg bekannten Prinzipien erfolgen, z.B. mit Hilfe der Finite-Elemente-Methode. Durch die Ausrichtungsstruktur werden - vereinfacht gesagt - die durch die Betriebskraft in den Werkzeughalter eingeleiteten Kräfte derart geleitet, dass der Werkzeughaltebereich eine möglichst gleich bleibende Ausrichtung, insbesondere Verkippung, auch unter der Betriebskraft behält.

Es sind auch andere als die hier angegebenen, technischen Merkmale denkbar, um eine zum Beispiel praktisch parallele Ausrichtung der beiden sich gegenüberstehenden Werkzeughaltebereiche von Zangenarmen eines Werkzeughalters unter Wirkung der Betriebskraft zu erreichen. Der vollständigen/ursprünglich (im Stand der Technik) möglichen Verkippung zumindest eines Werkzeughaltebereichs unter der Verformung/Belastung - z. B. durch Aufbiegen zweier sich gegenüberliegender Zangenarme - kann auch mit oder ohne Einleitung eines speziellen Moments, z. B. eines Drehmomentes, durch aktive oder passive, mechanische Wirkelemente gezielt/definiert entgegengewirkt bzw. zumindest kann diese teilweise oder vollständig kompensiert werden. Die Parallelität wird durch die Konstruktion/das Design der Schweißzange an sich vorherbestimmt, kann aber auch z.B. durch die Art und Weise des geometrischen Einbaus der Maschinenelemente erzielt werden, während das mechanische Verhalten der Zange im Hinblick auf die Aufbiegung und das Nachsetzverhaltens durch den Werkstoff, die Geometrie der Zange und die möglichen, zusätzlichen Maschinenelemente bestimmt wird. Darauf wird später noch näher eingegangen.

Diese Kompensationswirkung kann bereits bei der/durch die Gestaltung der einzelnen Module oder bei der Auslegung der Module im Hinblick auf deren Verbindung untereinander und eventuell mit Basisabschnitten des Werkzeughalters vorgesehen sein. Dann ist trotz des Leichtbaupotentials und flexibler Herstellung und flexiblem Einsatz für den jeweiligen Anwendungsfall eine genaue, reproduzierbare Funktion der Werkzeuge bzw. eine reproduzierbare Werkzeugpositionierung mittels des Werkzeughalters realisiert. Die hier beschriebene Kompensation kann grundsätzlich auch ohne Modularität, also ohne Module, vorgesehen seien, so dass dann ein Werkzeughalter praktisch einstückig und nicht modular aufgebaut ist. Diese Herstellung kann aus einem Stück erfolgen, so dass nicht mehrere Module gefertigt werden und hinterher zusammengefügt bzw. lösbar oder unlösbar miteinander verbunden werden müssen. Der beschriebene, nicht modulare Aufbau des Werkzeughalters ist mit allen hier beschriebenen Aspekten, technischen Merkmalen und Vorzügen der Erfindung umsetzbar.

Gemäβ der Erfindung, weist ein Modul selber die genannte resultierende Fachwerkstruktur - vollständig oder teilweise - auf. Dann ist die technische Auslegung der mechanischen Eigenschaften des Moduls und damit des Werkzeughalters einfach und reproduzierbarer zu bewerkstelligen/erreichen/erzielen. Das Modul selber kann bereits als Einheit die resultierende Fachwerkstruktur aufweisen, so dass die Verkippung des Werkzeughaltebereichs durch diesen Aufbau bedingt - zumindest teilweise - kompensiert wird. Es ist aber auch umfasst/beinhaltet, dass das Modul selber lediglich die wesentlichen, strukturellen und/oder mechanischen Komponenten, Eigenschaften, Geometrie, geometrische Anordnung oder Materialien aufweist, so dass die resultierenden Eigenschaften der Fachwerkstruktur überwiegend durch das Modul selber bedingt sind.

Alternativ oder zusätzlich kann ein Modul im Zusammenwirken mit einem anderen Modul und eventuell im Zusammenwirken mit, insbesondere nicht modularen, Basisabschnitten des Werkzeughalters die genannte resultierende Fachwerkstruktur ergeben. Das hat den Vorteil, dass eine größere Flexibilität und Gestaltungsfreiheit und/oder ein vergrößerter Bereich von gewünschten, mechanischen Eigenschaften bei der Auslegung des Moduls und/oder des Werkzeughalters erreichbar sind sind/erzielt werden können. Mehrere, einzelne Module, ergeben dann z.B. in der miteinander starr verbundenen Konfiguration die resultierende Fachwerkstruktur, indem modulübergreifend Abschnitte von verschiedenen Einzelmodulen mechanisch zusammenwirken.

Im Hinblick auf die mechanischen Eigenschaften, insbesondere die Verformungseigenschaften unter Einwirkung der Betriebskraft, des Werkzeughalters ist eine vorteilhafte, mechanisch besonders belastbare und für viele Anwendungszwecke gleichermaßen geeignete Ausführung gegeben, wenn der Werkzeughalter einen im wesentlichen C-förmigen, resultierenden Grundriss hat. Es kann sich dabei um z. B. eine so genannte C-Zange, z. B. an einer Widerstandsschweißanlage, handeln.

Die C-Form kann zwei modular aufgebaute Schenkel oder zwei Schenkelmodule und einen unter der Verformungskraft - zumindest abschnittsweise - praktisch starren bzw. vergleichsweise steifen Bügelrücken aufweisen, so dass sich insgesamt die beschriebene C-Form ergibt. Bei einem solchen Werkzeughalter sind die Verformungseigenschaften der Schenkel unter Einwirkung der Betriebskraft prägend für die Gesamteigenschaften des Werkzeughalters. Dadurch kann beispielsweise ein Schenkel oder können beispielsweise beide Schenkel der Art modular ausgelegt sein, dass schon bei einem starren Bügelrücken der Modularitätsgedanke praktisch allein durch die Schenkel oder Schenkelmodule realisiert wird. Das mechanische Verhalten - insbesondere das Verformungsverhalten - ist damit gut vorbestimmbar, berechenbar und reproduzierbar. Der Standardisierungsgedanke ist dadurch einfacher (also mit einer geringeren Komplexität oder Vielzahl von Einzelteilen) umsetzbar, und/oder eine bessere, angepasste Steifigkeit des gesamten Werkzeughalters erreichbar.

Der Werkzeughalter kann auch einen im wesentlichen X-förmigen, resultierenden Grundriss haben, wobei die Kreuzungsstelle der X-Form eine Lagerstelle oder ein Gelenk aufweist. Das hat den Vorteil, dass eine Seite des "X" den Werkzeughaltebereich aufweist und die andere Seite Mechanikelemente und/oder einen Antrieb für die Anpresskraft hat. Durch die X-Form ergibt sich insgesamt eine erhöhte Flexibilität, sowohl im Hinblick auf die Anordnung von Werkzeughalter, Mechanikelementen und/oder Antrieb als auch im Hinblick auf die mögliche Auslegung oder Anpassung der Module in Bezug auf den Einsatz des erfindungsgemäßen Werkzeughalters - insbesondere im Hinblick auf die Zugänglichkeit an der Fügestelle.

Die Vorteile der Erfindung, insbesondere die Auslegungs-Flexibilität, die einfache Fertigung bzw. der Aufbau und der Leichtbau (leichte (=Gewicht) und vergleichsweise einfache Aufbau (=Struktur)), sind besonders effektiv realisiert, wenn der Werkzeughalter als Schweißzange für eine Widerstands-Punktschweißanlage, insbesondere Roboterzange, Handzange oder Ständerzange, ausgebildet ist, und als Werkzeug zumindest eine Schweißelektrode trägt. Dabei kann es sich auch um eine lediglich einseitige, d.h. eine einarmige Konfiguration eines solchen Werkzeughalters handeln.

Es kann auch ein Ultraschall-Sender und ein Ultraschall-Empfänger in Durchschallungsanordnung oder in Reflektionsanordnung vorgesehen sein (jeweils bezüglich der Punktschweißstelle) zur Schweißpunktbewertung und/oder zur Regelung des Schweißprozesses. Die Flexibilität und der Leichtbau lässt Raum für die Anordnung solcher Sender und Empfänger. Die mechanischen Eigenschaften der Fügezange ermöglichen saubere Prozesssignale, die eine Prozessüberwachung und -regelung verbessern, zudem werden die eingebauten Mess-Werkzeuge gleichmäßig belastet, so dass hohe Standmengen erzielt werden können und die Störanfälligkeit gering bleibt bzw. verringert wird.

Eine Auslegung gemäß der Erfindung ergibt dabei den zusätzlichen Vorteil, dass es bei der Durchschallung und bei der Reflexion von Ultraschallwellen zur Schweißpunktbewertung oder Schweißregelung besonders auf die Ausrichtung der Elektroden und damit auch von Sender und Empfänger relativ zueinander für die Genauigkeit des Ultraschall-Verfahrens ankommt. Die genaue, reproduzierbare, zuverlässige, korrekte Ausrichtung der Werkzeughaltebereiche zueinander macht damit das Ultraschall-Verfahren sehr viel genauer, effizienter und in manchen Fällen (so z. B. bei sehr hoher Anpresskraft oder bei schwierigen Werkstückgeometrien bzw. großen Ausladungen der Zangen) erst anwendbar bis wettbewerbsfähig.

Durch das günstige mechanische Verformungsverhalten des Werkzeughalters inklusive der beiden eingebauten Elektroden/Werkzeuge zueinander bzw. zu den zu verbindenden Blechen - vorzugweise rechtwinklig - werden die Möglichkeiten zur Ultraschallprüfung bzw. -überwachung verbessert, weil der Anteil der reflektierten Wellen - vorzugsweise der für die Auswertung interessanteren Transversalwellen - reduziert wird und die Messsignalqualität verbessert werden kann.

Durch die senkrechte Ausrichtung der Elektroden zu den Blechen während des gesamten Schweißprozesses wird der Anteil der reflektierten Wellen des Ultraschallsenders auf ein Minimum begrenzt, so dass die "durchgelassenen" Ultraschallwellen auf der Empfangsseite für eine Qualitätsbewertung der Schweißpunkte verwendet werden können.

Die eingangs genannte Aufgabe wird auch von einer Widerstands-Punktschweißanlage gemäß Anspruch 15 gelöst. Eine solche Widerstands-Punktschweißanlage weist alle oben genannten Vorteile der Ansprüche 1 bis 14 auf.

Ebenfalls werden die eingangs genannten Aufgaben durch ein Verfahren zur Herstellung eines Werkzeughalters nach Anspruch 16 gelöst. Ein solcher Werkzeughalter hat alle genannten Vorteile der Ansprüche 1 bis 14. Zusätzlich ist vorgesehen, dass zumindest ein Modul, vorzugsweise ein Modul eines Zangenarmes, aus einem zusammenhängenden flächigen Werkstück einstückig ausgearbeitet und danach mit einem anderen Modul und eventuell mit Basisabschnitten des Werkzeughalters verbunden wird. Es können auch alle Module und/oder auch Basisabschnitte des Werkzeughalters in oben genannter Weise aus einem zusammenhängenden flächigen Werkstück einstückig ausgearbeitet sein. Das hat den Vorteil, dass die mechanischen Eigenschaften, insbesondere die elastischen Verformungseigenschaften, des Moduls oder der Module oder des Basisabschnittes oder der Basisabschnitte genau einstellbar, vorausbestimmbar und auch im Ergebnis reproduzierbarer sind. Die Anzahl an Schnittstellen bzw. die Zahl von Komponenten/Einzelstücken kann begrenzt werden bzw. unter konstruktiven Gesichtspunkten möglichst gering gehalten sein, um beim Zusammenbau möglichst wenig Toleranzen der Einzelkomponenten berücksichtigen zu müssen. Dadurch wird mit einem erfindungsgemäß hergestellten Werkzeughalter einen bessere, genauere und reproduzierbarere Performance des mechanischen Anteils am Gesamtsystem erzielt. In diesem Zusammenhang ist auch die Verwendung eines, insbesondere standardisierten, Baukastensystems aus Werkzeughalter-Komponenten sinnvoll, aus dem ein oder jeder erfindungsgemäße(r) Werkzeughalter zusammengesetzt werden kann.

Die Erfindung wird anhand von in den Figuren dargestellten Ausführungsbeispielen näher erläutert. Es zeigen:
Figur 1 a einen Werkzeughalter, nämlich eine Schweißzange, in X-Form im unbelasteten und damit unverformten Zustand,
Figur 1b den Werkzeughalter aus Figur 1a, wobei dem unverformten Zustand der verformte d.h. belastete Zustand überlagert ist,
Figur 2 eine Seitenansicht eines Werkzeughalters, einer C-Zange, gemäß der Erfindung, wobei der Werkzeughalter eine Schweißzange sein kann und modular aufgebaut ist,
Figur 3 nicht belegt,
Figur 4 eine Schweißzange in C-Konfiguration mit einem Antrieb für die Bewegung der oben dargestellten Schweißelektrode, wobei auch hier dem unverformten Zustand ein verformter (d. h. belasteter) Zustand überlagert dargestellt ist und die Auswirkungen der Belastung dargestellt sind,
Figur 5 ebenfalls eine C-Zange mit einem mechanischen Wirkelement, nämlich einer Feder, im Zangenzwischenraum (Grundmodell),
Figur 6 eine C-Zange mit modular aufgebauten Zangenarmen und teilweise gezeigten Schweißelektroden in unterschiedlich langen Ausladungen und Ausführungsvarianten,
Figur 7a bis d als Teilansicht einer erfindungsgemäßen Schweißzange jeweils die Seitenansicht auf den Anbringungsbereich einer gekröpften Schweißelektrode, und zwar mit Krafteinleitung, die durch die resultierende, geometrische Hebelwirkung ein erfindungsgemäßes Moment erzeugt und damit der üblichen, aus dem Stand der Technik bekannten, Verkippung des Werkzeughaltebereichs entgegenwirkt,
Fig. 7e und 7f als Teilansicht einer erfindungsgemäßen Schweißzange jeweils die Seitenansicht auf den Anbringungsbereich einer geraden, also nicht gekröpften Schweißelektrode, und zwar mit Krafteinleitung, die durch die resultierende, geometrische Hebelwirkung ein erfindungsgemäßes Moment erzeugt und damit der Verkippung des Werkzeughaltebereichs entgegenwirkt, 7e ist Stand der Technik, 7f Erfindung, durch diese Figuren soll ein direkter Vergleich ermöglicht werden,
Figur 8a und 8b jeweils eine C-Schweißzange mit separaten Modulen, mittels derer sowohl die Ausladung als auch das Stichmaß konfigurierbar ist,
Figur 9 zu einem schrägen Zangenarm zusammengesetzte Schrägmodule, nämlich exemplarisch verschiedenste denkbare Ausprägungen an Zangenarmgeometrien,
Zusammenbau/-wirken von Zangenarmen, Bügeleckknoten und Werkzeugträger,
Fig. 10a und Fig. 10b jeweils eine C-Schweißzange, welche an eine bestimmte Fügeaufgabe besonders individuell anzupassen ist,
Fig. 11 eine X-Schweißzange, wobei die Antriebsseite und die Werkzeugseite unterschiedliche mechanische Prinzipien (Konstruktionsprinzipien) aufweisen,
Fig. 12 einen Ausschnitt aus einem erfindungsgemäßen Werkzeughalter, wobei eine Diagonalstrebe in unterschiedlichen Einbaulagen mittels entsprechend vorgesehener Langlöcher zu befestigen ist und der Wirkmechanismus durch geometrischen Einbau der Diagonalstrebe definiert eingestellt werden kann,
Fig. 13 eine Seitenansicht auf einen Ausschnitt aus einem erfindungsgemäßen Werkzeughalter,
Fig. 14 ebenfalls eine Seitenansicht auf einen Ausschnitt aus einem erfindungsgemäßen Werkzeughalter mit nachträglich eingesetzter Diagonalstrebe,
Fig. 15 eine Seitenansicht auf einen Ausschnitt mit unterschiedlichen, nachträglich einsetzbaren Diagonalstreben in einem Rechtecksegment,
Fig. 16 eine Seitenansicht auf einen Ausschnitt der Figur 15 mit einer exemplarisch eingesetzten Verkippstrebe,
Fig. 17 eine Seitenansicht auf einen Ausschnitt aus einem erfindungsgemäßen Werkzeughalter, wobei eine unsymmetrische, außermittige Anordnung einer Diagonalstrebe geometrisch angedeutet ist,
Fig. 18 ebenfalls einen Ausschnitt mit exemplarisch eingezeichneter Diagonalstrebe bei mittig angeordneter Konfiguration,
Fig. 19 den Ausschnitt der Fig. 18 mit exemplarisch eingezeichneter Diagonalstrebe in außermittiger Konfiguration,
Fig. 20 einen Ausschnitt mit zwei eingesetzten Diagonalstreben,
Fig. 21 eine Seitenansicht auf eine X-Zange mit unterschiedlicher Ausladung sowohl auf der Antriebsseite als auch auf der Werkzeugseite,
Fig. 22 die X-Zange der Fig. 21, wobei die verformte, d. h. belastete, Konfiguration der unbelasteten Konfiguration überlagert dargestellt ist,
Fig. 23 zur Verdeutlichung die Verformungsverhältnisse an einer erfindungsgemäßen X-Zange,
Fig. 24 zur Verdeutlichung die Verformungsverhältnisse an einer erfindungsgemäßen C-Zange, lediglich an einem Zangenarm dargestellt, da der Bügelrücken mit den Bügeleckknoten im dargestellten Ausführungsbeispiel vergleichsweise starr ausgeführt ist,
Fig. 25a und 25b eine C-Zange, wobei die unterschiedlichen Auslegungsprinzipien exemplarisch bereichsweise in Figur 25b eingezeichnet sind,
Fig. 26a und 26b eine C-Zange, wobei die Verformungsverhältnisse - verformter und unverformter Zustand - bei erfindungsgemäßer Auslegung mit resultierendem Moment der Verformung unter Einwirkung der Betriebskraft gegenübergestellt sind,
Fig. 26c und 26d eine modular aufgebaute Zange bzw. einen modular aufgebauten Zangenarm,
Fig. 26e eine perspektivische Seitenansicht eines zweischichtig aufgebauten Sandwich-Werkzeughalters,
Fig. 26f eine Seitenansicht eines zweischichtig aufgebauten Sandwich-Werkzeughalters,
Fig. 26g eine Seitenansicht des zweischichtig aufgebauten Sandwich-Werkzeughalters der
Fig. 26e,

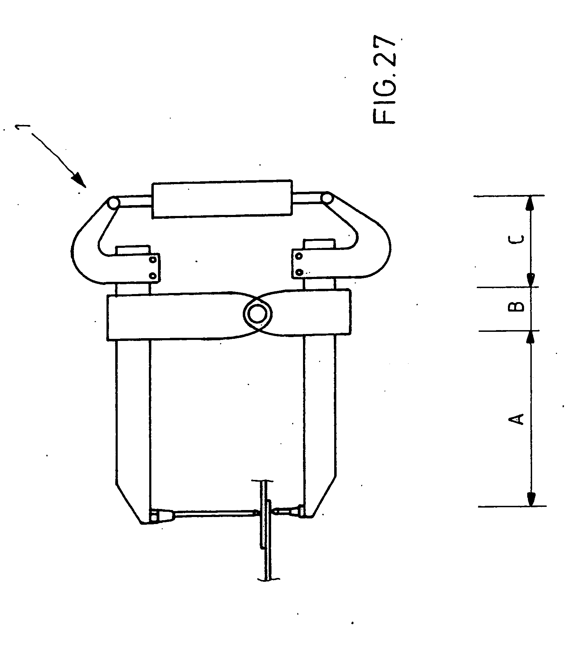

Fig. 27 eine X-Zange, wobei die unterschiedlichen Auslegungsprinzipien exemplarisch bereichsweise in der Figur eingezeichnet sind,

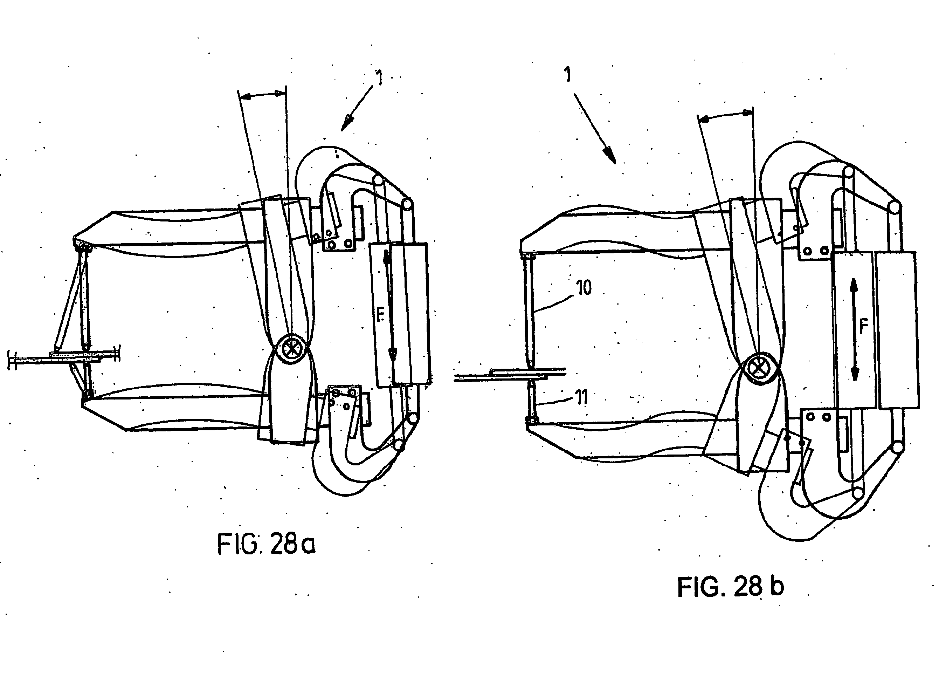

Fig. 28a und 28b eine Gegenüberstellung mit jeweils der unverformten Konfiguration überlagerter, verformter Konfiguration einer X-Zange, jeweils mit konventioneller Auslegung und mit erfindungsgemäßer Auslegung, bei der in den Zangenarmen interne resultierende Momente wirken, die dazu führen, dass das gehaltene Werkzeug mit dem Werkzeughaltebereich in der vorgegebenen Ausrichtung bleibt,

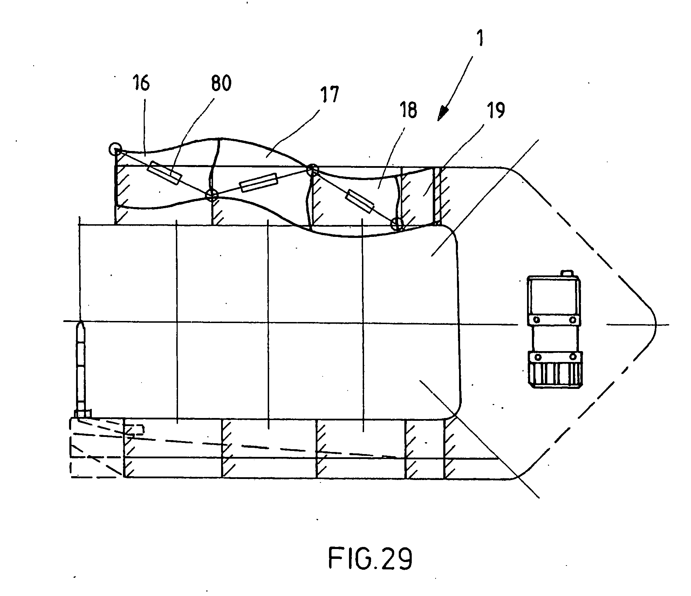

Fig. 29 eine C-Zange, wobei ein Zangenarm verformt und aus mehreren Einzelmodulen aufgebaut dargestellt ist, wobei die Einzelmodule mechanische Wirkelemente in Diagonal-Anordnung enthalten,

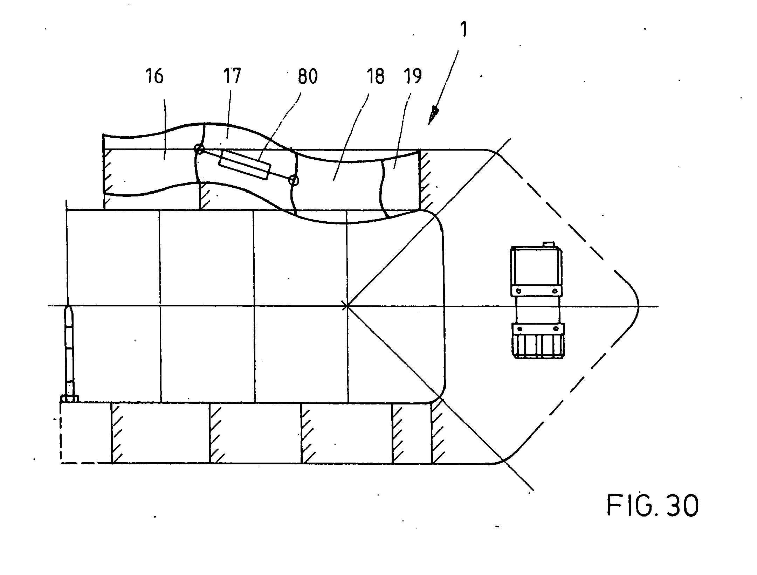

Fig. 30 ein Ausführungsbeispiel mit Parallelausrichtung eines Wirkelementes in einem Modul einer C-Zange,

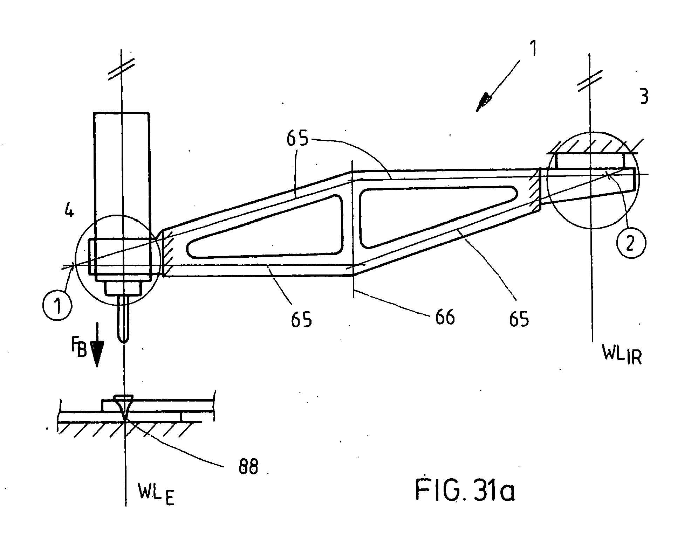

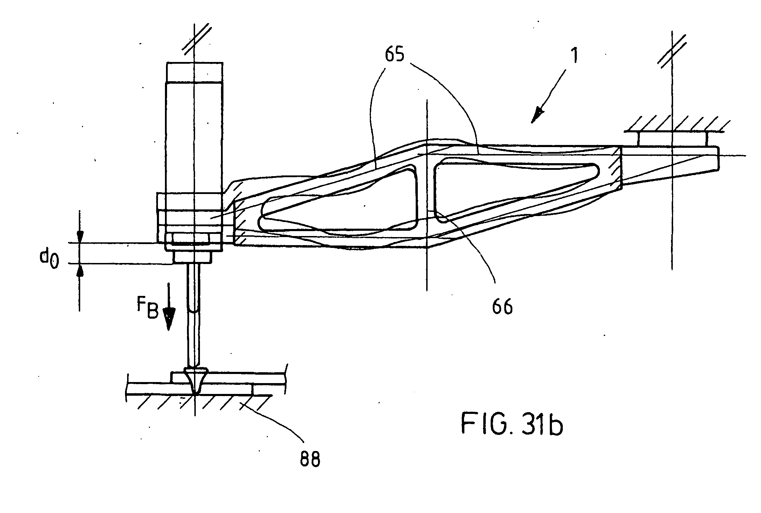

Fig. 31 a und 31 b jeweils eine Seitenansicht auf ein Ausführungsbeispiel mit einem einseitigen, d.h. einarmigen Werkzeughalter, unverformt und verformt,

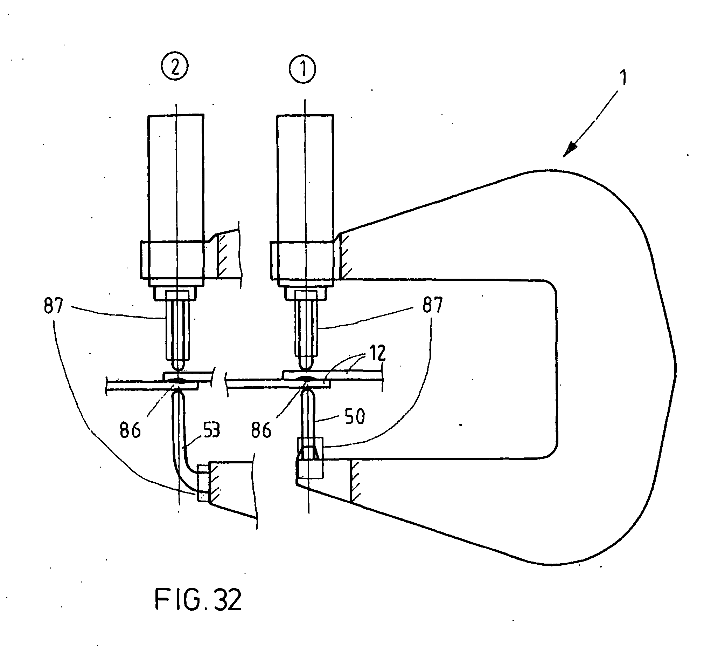

Fig. 32 eine Seitenansicht eines C-Bügels, bei dem mögliche Positionen für die Anordnung eines Ultraschall-Elements gezeigt sind,

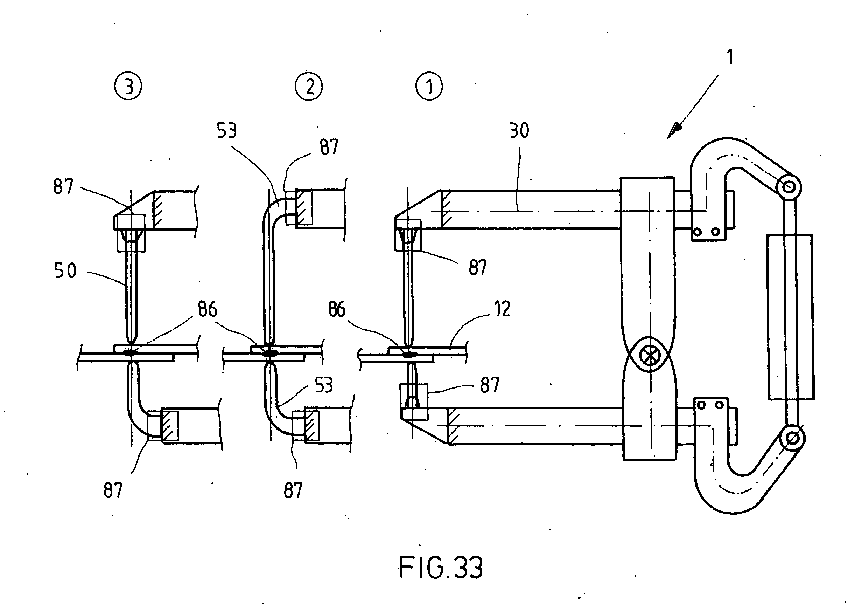

Fig. 33 eine Seitenansicht einer X-Schweißzange, bei der mögliche Positionen für die Anordnung eines Ultraschall-Elements gezeigt sind.

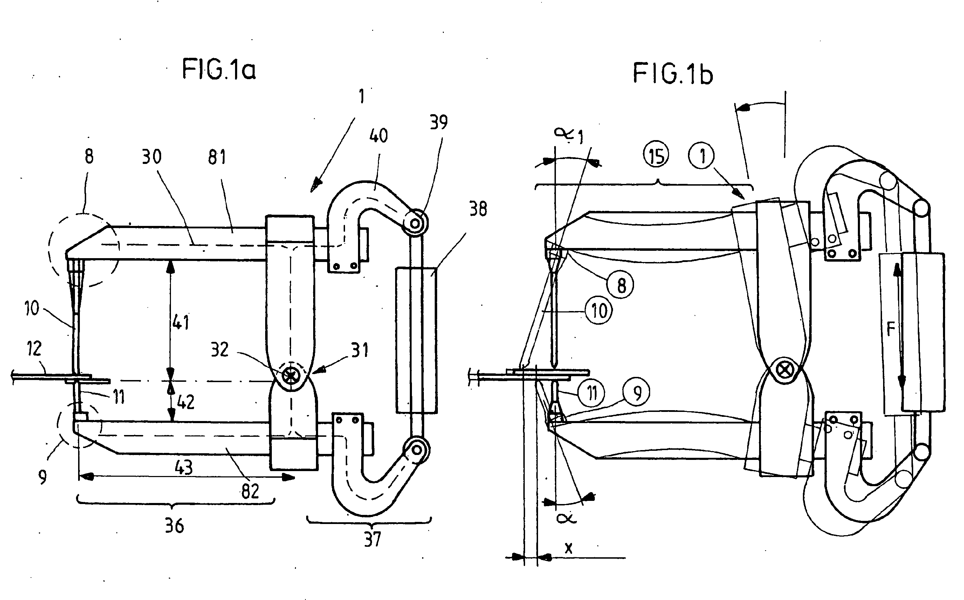

Figur 1 zeigt einen Werkzeughalter 1, im gezeigten Ausführungsbeispiel eine Schweißzange, in X-Form. Im folgenden wird meist auf einen Werkzeughalter 1 generell Bezug genommen, damit sind immer auch alle obengenannten und alle sonstigen, denkbaren Werkzeughalter gemeint. Der Werkzeughalter 1 hat eine Werkzeugseite 36 und eine gegenüberliegende Antriebsseite 37, die über eine Lagerstelle 32 (hier ein Scharnier bzw. Gelenk) nach Art einer X-Schweißzange beweglich verbunden sind. Die Lagerstelle 32 befindet sich im wesentlichen in der Kreuzungsstelle 31 des X-Grundrisses 30 des Werkzeughalters 1. Je nachdem ob die miteinander verbundenen Zangenarme auf Antriebs- bzw. Elektrodenseite sich kreuzen oder sich auf einer Seite ober- oder unterhalb des Lagers befinden, spricht man von Scherenzange oder im zweiten Fall von einer X-Zange. Die Figuren 1a und 1b dienen dem allgemeinen Verständnis und dem Verständnis zum Stand der Technik auf deren Basis später die Vorteile der erfinderischen Lösung beschrieben werden können.

Zur Darstellung der Problematik wurde bewusst eine unsymmetrische Zange ausgewählt, um das Problem möglichst deutlich beschreiben zu können. Dies entspricht häufig dem Stand der Technik/bzw. dieser Fall/Situation ist häufig in der Praxis anzutreffen. Bei gleicher Steifigkeit der Zangenarme aber unterschiedlichen Stichmaßen auf den beiden Elektroden- bzw. Werkzeugseiten verformt sich der Werkzeughalter unsymmetrisch, so daß kritische Werkzeugversätze zwischen den beiden Werkzeugen 10 und 11 (hier den Elektroden) entstehen.

Auf der Antriebseite 37 ist ein Antrieb 38 (z. B. ein Elektromotor, ein Hydraulikzylinder oder ein Pneumatikzylinder) schematisch gezeigt. Der Antrieb 38 kann über die Anlenkung 39 (oben und unten in Fig. 1a gezeigt) die Anlenkhebel 40 oben und unten zusammenziehen oder spreizen, wodurch - übertragen durch die Lagerstelle 32 - die Zangenarme 81,82 entsprechend ausgelenkt werden. Wenn z. B. der Antrieb 38 die Anlenkhebel 40 spreizt, werden die beiden gegenüberliegenden, im Werkzeughaltebereich 8, 9 angebrachten Werkzeuge 10, 11 (z. B. Schweißelektroden mit entsprechenden Schäften) mit einem oder mehreren dazwischen liegenden Werkstück(en) 12 zusammen gedrückt (im Falle einer X-Zange, bei einer Scherenzange sind die entsprechenden Verhältnisse umgekehrt). Solche Kräfte, mit denen die Werkzeuge 10,11 über den Antrieb 38 gegeneinander gepresst werden, können sehr hoch sein und bei einem typischen Widerstandsschweißprozess normalerweise zwischen 2 und 5 kN betragen, neue Material-/Blechdickenkombinationen erfordern durchaus Elektrodenkräfte bis zu 10kN, Beim mechanischen Fügen können die Stempel-/Umformkräfte ohne weiteres bis zu 70/80kN für z.B. hochfeste Stähle, mehrlagige Verbindungen und/oder dicke Einzel-/Gesamtblechdicken betragen.

Unter dieser großen Anpresskraft verformen sich die Zangenarme 81,82, wie in Fig. 1b gezeigt. Sie verformen sich durch Aufbiegung in einem Verformungsbereich 15, wodurch der Werkzeughaltebereich 8,9 ebenfalls in dem gezeigten Sinne mit ausgelenkt und die jeweils innere Oberfläche des Werkzeughaltebereichs 8,9 um den Auslenkwinkel α1 bzw. α2 gegenüber der unverformten, senkrechten Ausrichtung verkippt wird. Dabei sind die Zangenarme 81,82 im vorliegenden Ausführungsbeispiel im Verformungsbereich 15 innenseitig, d. h. an der dem Zangenzwischenraum zugewandten Seite, (hier beispielhaft und ohne Einschränkung der Allgemeingültigkeit der Erfindung) im wesentlichen konvex gekrümmt und außenseitig konkav.

Dies verdeutlicht die Problematik der Zangenaufbiegung, wodurch die Werkzeuge 10,11 eine Fehlausrichtung - wie oben beschrieben - erfahren und wodurch die Qualität der Bearbeitung stark bis entscheidend beeinträchtigt werden kann. Dadurch ergibt sich ein nachteiliger Werkzeugversatz X der Werkzeuge des Prozesses (Schweißen, Umformen, Clinchen, Stanznieten, Prägen, Handhaben, Montieren...).

Durch diese Problematik der Zangenaufbiegung wird die Anzahl möglicher Zangenfenster (Geometrie) bzw. Betriebskräfte F_{B} eingeschränkt, und zwar insbesondere durch die mechanischen Eigenschaften der konventionellen Zangenarme, durch einen unsymmetrischen Zangenaufbau, durch die höheren Elektrodenkräfte in Folge größerer Einzel- und Gesamtblechdicken, den Einsatz hoch-, höher- und höchstfester Bleche und/oder Stahlbleche, die zunehmend z. B. in der Automobilindustrie zum Einsatz kommen, sowie der Abhängigkeit des Werkzeugversatzes im wesentlichen vom Zangenaufbau (Werkstoffe, Geometrien Symmetrie/Unsymmetrie,...) und der resultierenden Höhe der Elektrodenkraft. In der Figur 1b sind die entsprechenden, mechanischen Verformungen der besseren Übersichtlichkeit und Deutlichkeit halber - wie im folgenden viele bis alle der gezeigten (auch strukturellen) Merkmale - überzeichnet bis sehr stark übertrieben dargestellt.

Gleichzeitig mit der Verformung werden auch die Werkzeuge 10,11 verkippt, so dass sie - wie in der Figur 1b übertrieben gezeigt - eine gegenseitige Verkippung α₁ bzw α₂ und eine lineare Fehlausrichtung x und eine Abweichung von der gemeinsamen Flucht und/oder der gemeinsamen Spitzen-Überdeckung aufweisen. In der Literatur werden diese oft sinngemäß als axiale und radiale Werkzeugversätze bezeichnet.

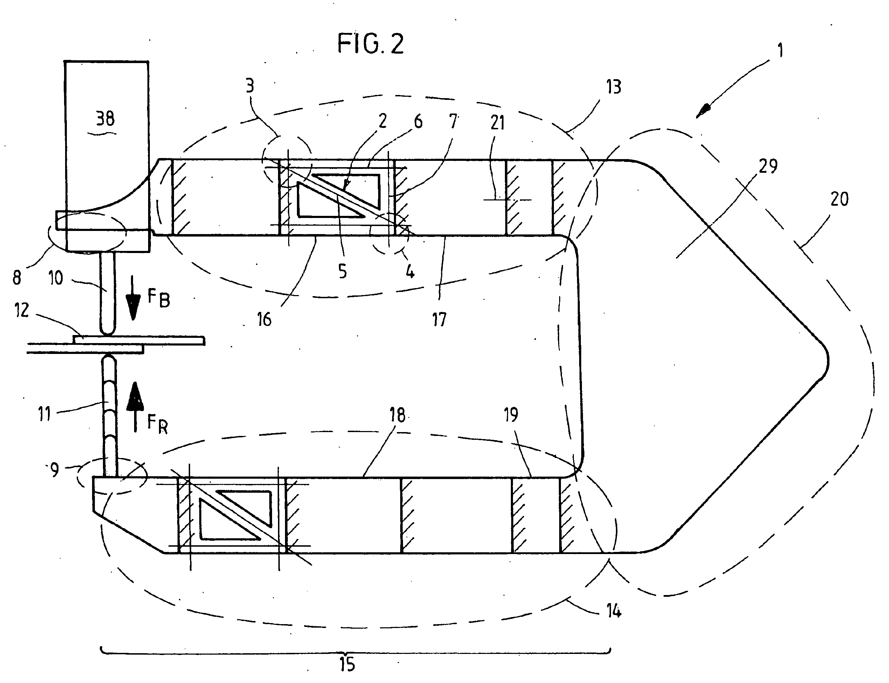

In Figur 2 ist ein erfindungsgemäßer Werkzeughalter gezeigt. Ein solcher Werkzeughalter ist insbesondere für Anlagen für umformtechnische Fügeprozesse, insbesondere Clinchen und Stanznieten, sowie thermische Fügeprozesse wie Widerstandspunktschweißen, Handlingsprozesse, Prägeprozesse, Schraub- und Einpressprozesse vorgesehen. Der Werkzeughalter 1 in Figur 2 hat eine C-Form, wobei das C nach links in der Figur 2 geöffnet ist. Der Werkzeughalter 1 hat in einem hier exemplarisch hervorgehoben dargestellten Abschnitt eine geometrische Fachwerkstruktur 2. In der geometrischen Fachwerkstruktur 2 sind Strebenelemente (Schrägstrebe/Diagonalstrebe 5, Längsstrebe 6, Querstrebe 7) vorgesehen, die in Knotenbereichen 3,4 miteinander starr verbunden sind. In diesen Knotenbereichen 3,4 treffen die Streben 5,6,7 aufeinander und sind praktisch starr und fest, vorzugsweise einstückig und aus einem Teil gefertigt, miteinander verbunden. Im unteren dargestellten Zangenarm ist exemplarisch ein Modul abgebildet, wobei die Ausrichtung der Diagonalstrebe von links oben nach rechts unten die gleiche ist, die Wirkung aber für das Diagonalelement eine andere ist. Unten vorzugsweise auf Druck belastet, oben auf Zug, d.h. die Wirkung ist eine andere oben wie unten.

In den beiden gegenüberliegenden Werkzeughaltebereichen 8,9 sind jeweils Werkzeuge 10,11 gehalten, die im Betrieb unter elastischer Verformung - unter anderem - der Fachwerkstruktur 2 mit einer Betriebskraft F_{B} (Reaktionskraft F_{R}) gegen ein Werkstück 12 (z. B. zwei übereinander gelegte und mittels Schweißpunkten zu verbindende Bleche) und damit praktisch gegeneinander gepresst werden. Die Werkzeuge 10,11 sind hier als Schweißelektroden gezeigt. Sie können auch Clinchwerkzeuge, Nietwerkzeuge, Stanzwerkzeuge, Tiefzieh-Werkzeuge, Handlings-/Transportwerkzeuge, z. B. Greifer, Prägewerkzeuge, Schraubwerkzeuge, Einpresswerkzeuge oder jegliche andere Werkzeuge sein. Desgleichen können auch die Werkstücke 12 entsprechende Werkstücke sein, z. B. zu clinchende Bleche, zu transportierende Werkstücke jeglicher Art, zu prägende Bleche oder andere Werkstücke.

Im gezeigten Ausführungsbeispiel wird durch den Antrieb 38 das obere Werkzeug 10 gegen das Werkstück 12 und damit gegen die untere Elektrode 11 mit der Betriebskraft angepresst.

Der gezeigte Werkzeughalter 1 weist in zumindest einem Teilbereich 13,14 eines elastisch unter der Betriebskraft zu verformenden Bereichs 15 (dieser entspricht im gezeigten Beispiel, muss aber nicht zwingend entsprechen, im wesentlichen dem Bereich der Zangenarme über ihre gesamte Ausladung) mehrere starr miteinander verbundene Module 16, 17, 18, 19 auf. Die Module 16, 17,18 sind miteinander z. B. über Schraubverbindungen 21 und entsprechende Stifte miteinander verbunden. Das Modul 19 ist über eine Schraubverbindung 21 starr mit einem Basisabschnitt 20 des Werkzeughalters 1 verbunden, der im gezeigten Ausführungsbeispiel praktisch dem Bügelrücken 29 des Werkzeughalters 1 entspricht.

Die Module 16,17,18,19 können untereinander und eventuell mit Basisabschnitten 20 oder mit einem Basisabschnitt 20 des Werkzeughalters 1 alternativ oder zusätzlich unlösbar und fest verbunden, z. B. verschweißt oder verklebt, sein. Die Fachwerkstruktur 2 ist lediglich der besseren und übersichtlichen Darstellung halber hier nur für das Modul 16 gezeigt. Die anderen Module 17, 18,19 können ebenfalls eine Fachwerkstruktur aufweisen. Die Schnittstellen, z.B. Verbindungs- oder Anschlussstellen der Module 16,17, 18,19 sind durch eine angedeutete Teilschraffur repräsentiert.

In dem Modul 16, dessen Fachwerkstruktur 2 gezeigt ist, ist (alle Angaben beispielhaft) die Diagonalstrebe 5 so ausgerichtet, dass ihre Mittellinie (das ist üblicherweise die sogenannte neutrale Faser eines geometrischen Querschnittes beispielsweise unter Biegebelastung, hier der Diagonalstrebe 5) nicht in der Mitte der Knotenbereiche 3,4 in diese einmündet, sondern bezüglich des oberen Knotenbereiches 3 unterhalb der Mitte und bezüglich des unteren Knotenbereiches 4 oberhalb der Mitte des jeweiligen Knotenbereiches 3 bzw. 4

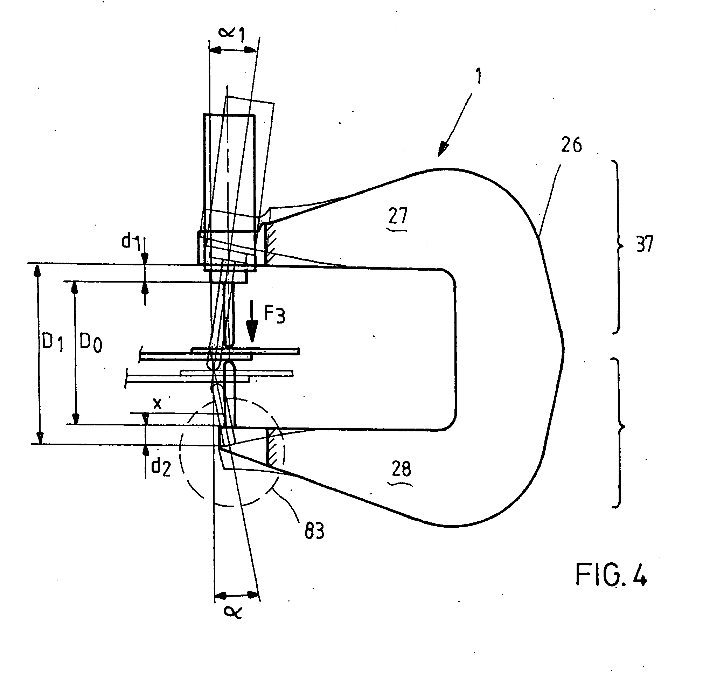

Dadurch wird bei der Verformung unter der Betriebskraft F_{B} durch die resultierende Fachwerkstruktur 2, das ist die gesamte Fachwerkstruktur 2 aller Module 16,17, 18,19 und aller Basisabschnitte 20 zusammengenommen, ein Verformungsmoment verursacht. Dieses Verformungsmoment resultiert aus der außermittigen, oben beschriebenen Ausrichtung. Diese strukturelle, resultierende, außermittige Ausrichtung mit dem resultierenden (z.B. Dreh-) Moment führt dazu, dass eine unter der Verformung aus dem Stand der Technik bekannte entstehende Verkippung α1 bzw. α2 des Werkzeughaltebereichs 8,9 (Figur 4) gegenüber der unverformten Konfiguration zumindest teilweise, vorzugsweise vollständig, kompensiert ist/wird.

Figur 4 zeigt zur Verdeutlichung noch einmal die geometrischen Verformungs-Verhältnisse bei einer C-Zange aus dem Stand der Technik. C-Zange bedeutet, dass der Werkzeughalter 1 einen C-Grundriss 26 mit einem C-Schenkel 27 oben und einem C-Schenkel 28 unten hat.

Die Betriebskraft auf der Antriebsseite führt zu einer Aufbiegung sowohl auf Antriebsseite d1 als auch auf Elektrodenseite d2, die aufgrund der Steifigkeit der Zangenarme voneinander abweichen können. Durch die elastische Verformung des im wesentlichen C-förmigen Grundrisses entsteht ein Winkelversatz α1 auf der Antriebseite 37 und ein Winkelversatz α2 auf der Gegenseite 83. Dies führt insgesamt zu einer von der Grundstellung D0 abweichenden Stellung D1.

Der unsymmetrische Zangenaufbau und das unterschiedliche Verformungsverhalten auf Antriebseite bzw. Gegenseite führt zu einem Relativversatz x der Elektroden unter elastischer Verformung bzw. Aufbiegung der Schweißzange, die mehr oder weniger kritisch für den Fügeprozeß ist und bei gegebenem Zangenaufbau mit der Erhöhung der Elektrodenkraft immer kritischer wird.

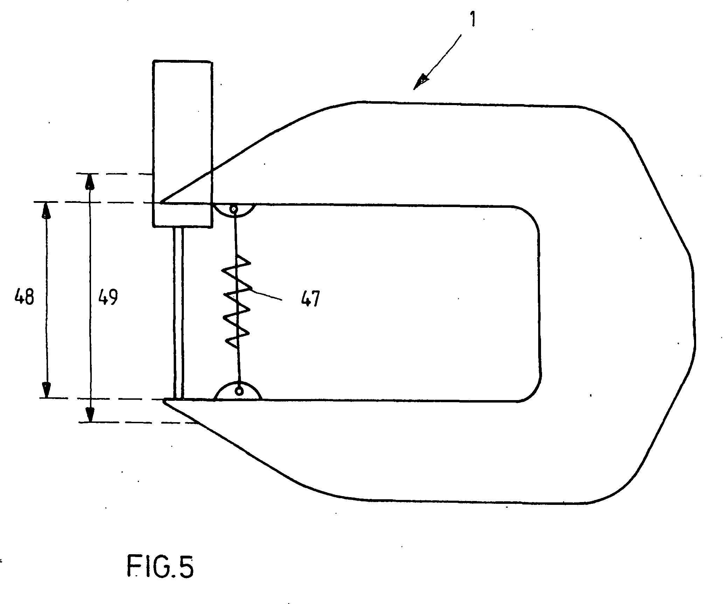

Figur 5 zeigt nochmals grob schematisch die vertikale Zangenöffnung 48 ohne Anpresskraft und dazu überlagert die vertikale Zangenöffnung 49 unter der Anpresskraft. Da die zulässige Aufbiegung bzw. z.B. das Dämpfungsverhalten im Vorfeld nicht immer bekannt ist und abhängig von der Schweißaufgabe im Einzelfall definiert wird, kann die vertikale Zangenöffnung 49 mit wirkender Elektrodenkraft - die im wesentlichen von der Höhe der Elektrodenkraft und der Steifigkeit des C-Bügels abhängt - angepasst werden bzw. durch Änderung der mechanischen Eigenschaften oder durch strukturelle Änderungen (wie oben bzw. noch weiter unten eingehend erläutert) eingestellt, z.B. voreingestellt, vormontiert oder vorbestimmt sein. Dazu dient in Figur 5 beispielhaft ein eventuell vorgespanntes Federelement 47, mit dem die Aufbiegung und das Dämpfungsverhalten bzw. das Nachsetzen (direkt) beeinflusst, d. h. eingestellt werden kann.

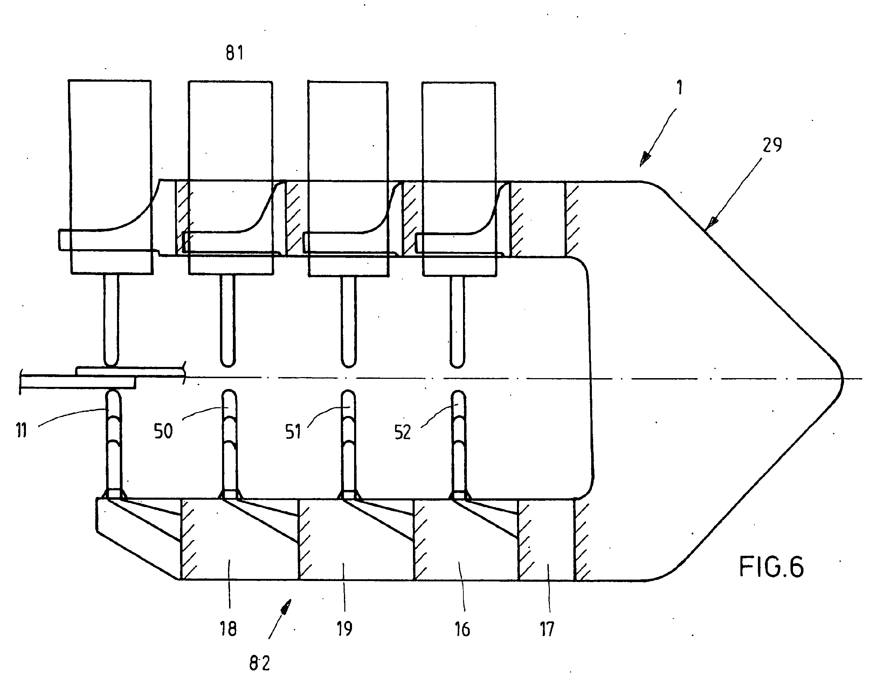

Figur 6 zeigt einen Werkzeughalter 1 mit modular aufgebauten Zangenarmen 81,82 und einem steifen, aus einem Stück, also nicht-modular aufgebauten Bügelrücken 29. Dies kann auch ein (nicht gezeigtes) standardisiertes Variantenprogramm von Basisabschnitten 20 /Bügelrücken 29 und verschiedenen Modulen sein. Mögliche Ausführungsvarianten sind in der Figur 6 gezeigt. Dort sind in der Seitenansicht Module 16,17, 18,19 mit hinsichtlich der Eigenschaften verschiedensten Elektrodenschäften 50, 51,52 gezeigt, die jeweils mit einem Ausleger an dem jeweils äußersten Modul 16, 17 bzw. 18 bzw. 19 angebracht sind.. Die Schweißelektroden 50, 51,52 können beliebige, unterschiedliche Höhen/Längen/Durchmesser bzw. Geometrien haben, müssen nicht rechtwinklig angeordnet sein und können auch gekröpft sein. Darauf sind Bügelrücken 29 und Module 16,17, 18,19 eingestellt. Während an dem äußersten Modul 18 das Werkzeug 11 (also die Schweißelektrode) angebracht ist, tragen die darauf nach innen folgenden Module 19,16,17 keine Werkzeuge, sondern sind lediglich miteinander bzw. mit dem starren Bügelrücken 29 verbunden. Dies ist hier bezüglich des Moduls 17 gezeigt. Die Verbindung zwischen den Modulen 17 bzw. zwischen Modul 17 und Bügelrücken 29 kann lösbar oder unlösbar fest und/oder starr sein.

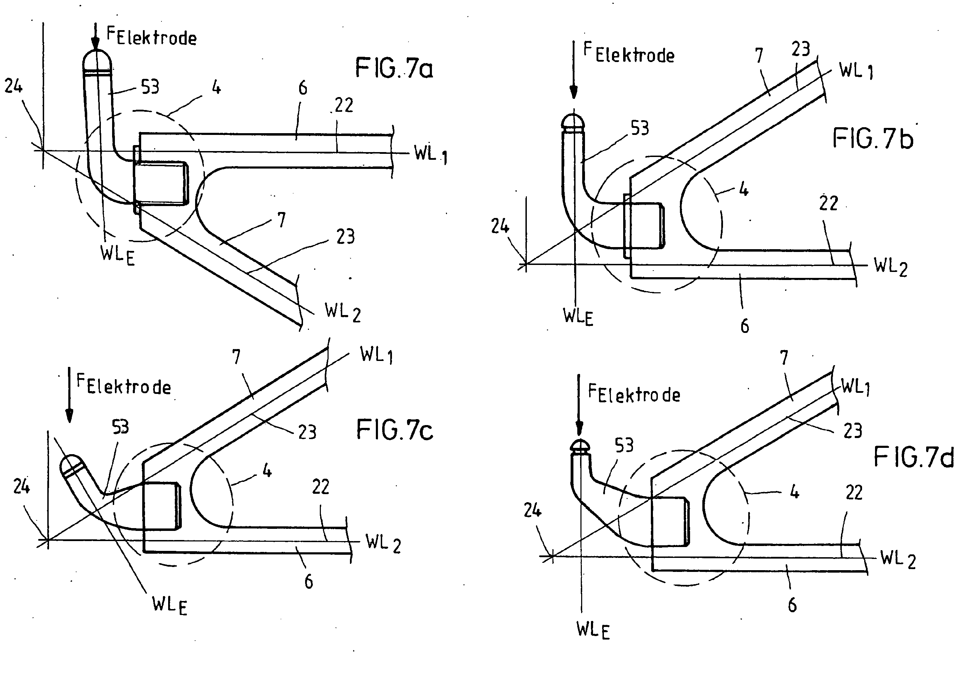

Die Figuren 7a, 7b, 7c, 7d zeigen unterschiedliche Module oder Modulabschnitte mit jeweils in einem Knotenbereich 4, der einem Werkzeughaltebereich 8 entspricht, angebrachten, gekröpften Schweißelektroden 53. Für alle Figuren 7a,7b, 7c, 7d, gilt, dass die Elektrodenkraft ein Biegemoment um den Schnittpunkt 24 der Wirklinien WL1 und WL2 hervorruft, da die Wirklinien der Elektrodenkraft WLE nicht durch den Schnittpunkt 24 verlaufen. Die genannten Wirklinien WL1 und WL2 entsprechen dabei den Mittellinien 22 bzw. 23 der Längsstrebe 6 bzw. der Querstrebe 7. Der Schnittpunkt der Wirklinien WL1 und WL2 (also der Mittellinien 22 bzw. 23) liegt jeweils bezüglich des betreffenden Fachwerk-Moduls nach außerhalb verschoben gegenüber dem Krafteinleitungspunkt und/oder der Kraftlinie der Elektrodenkraft. Umgekehrt liegt also die Kraftlinie und/oder der Krafteinleitungspunkt nach innerhalb verschoben gegenüber dem Schnittpunkt der Wirklinien WL1 und WL2. Diese Ausgestaltung ist auch bei nicht gekröpften Elektroden anwendbar, wie in den folgenden Figuren gezeigt.

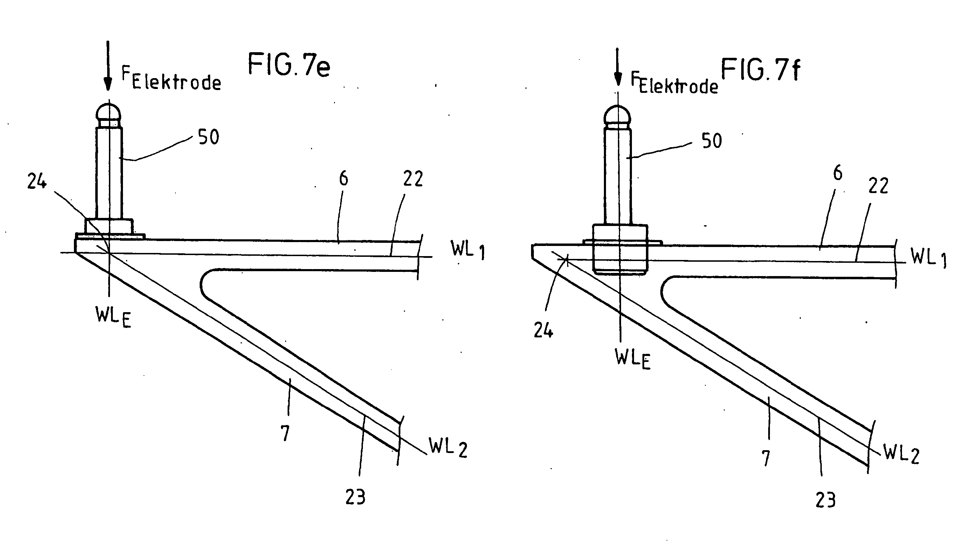

Die Figuren 7e und 7d zeigen Ausgestaltungen mit gerader, also ungekröpfter Elektrode 50. In Figur 7e liegt der Schnittpunkt der Wirklinien WL1 und WL2 (also der Mittellinien 22 bzw. 23) jeweils bezüglich des betreffenden Fachwerk-Moduls praktisch in der Kraftlinie der Elektrodenkraft. Dies kann dem Stand der Technik entsprechen.

Erfindungsgemäß liegt in Figur 7f der Schnittpunkt der Wirklinien WL1 und WL2 (also der Mittellinien 22 bzw. 23) jeweils bezüglich des betreffenden Fachwerk-Moduls nach außerhalb verschoben gegenüber dem Krafteinleitungspunkt und/oder der Kraftlinie der Elektrodenkraft. Umgekehrt liegt also die Kraftlinie und/oder der Krafteinleitungspunkt nach innerhalb verschoben gegenüber dem Schnittpunkt der Wirklinien WL1 und WL2. Dies entspricht der erfindungsgemäßen Ausprägung.

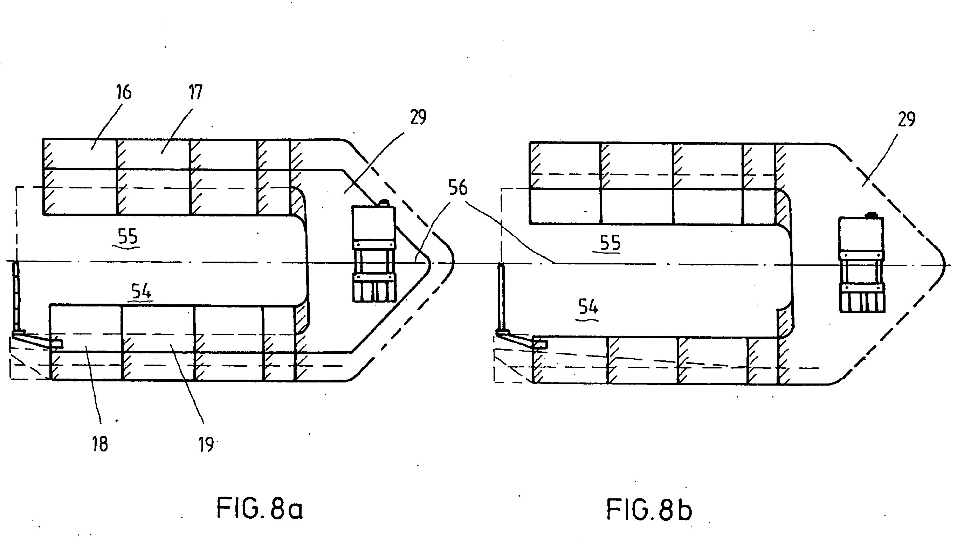

Die Figuren 8a und 8b zeigen eine gleiche Werkzeugachse 56 in beiden Konfigurationen, aber eine in den Konfigurationen unterschiedliche Aufteilung des vertikalen Zangenfensters auf der Antriebsseite 55 bzw. der Elektrodenseite 54.

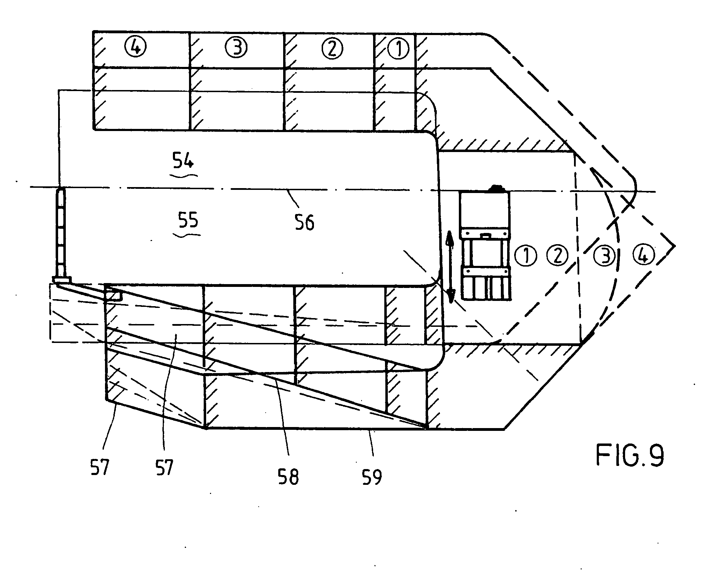

Schließlich ist in der Seitenansicht der Figur 9 gezeigt, dass die Module 57,58 auf der Elektrodenseite 55 als Schrägmodule ausgebildet sind, um eine gewünschte Zangegeometrie und eine entsprechende, z.B. entlang der Zangenöffnung variable, vertikale Ausladung zu erzielen. Eine derartige Geometriekonstellation ist oft durch die Zugänglichkeit am Bauteil erforderlich. In einer anderen Konfiguration (ebenfalls in der Figur 9 gezeigt) ist lediglich das Modul 57 als Schrägmodul ausgeführt. Es ist an einem langen Geradmodul befestigt, welches wiederum an dem Bügelrücken angebracht ist. Hinweis: beliebige Konstellationen sind denkbar.

Die mechanischen Strukturen bzw. das mechanische oder strukturelle Auslegungsprinzip nach dem Anspruch 1 wird im Folgenden lediglich der Einfachheit halber und ohne jede technische Einschränkung verkürzt als (gegebenenfalls abschnittsweise und/oder gegebenenfalls fluchtende) "Ausrichtungsstruktur" bezeichnet.

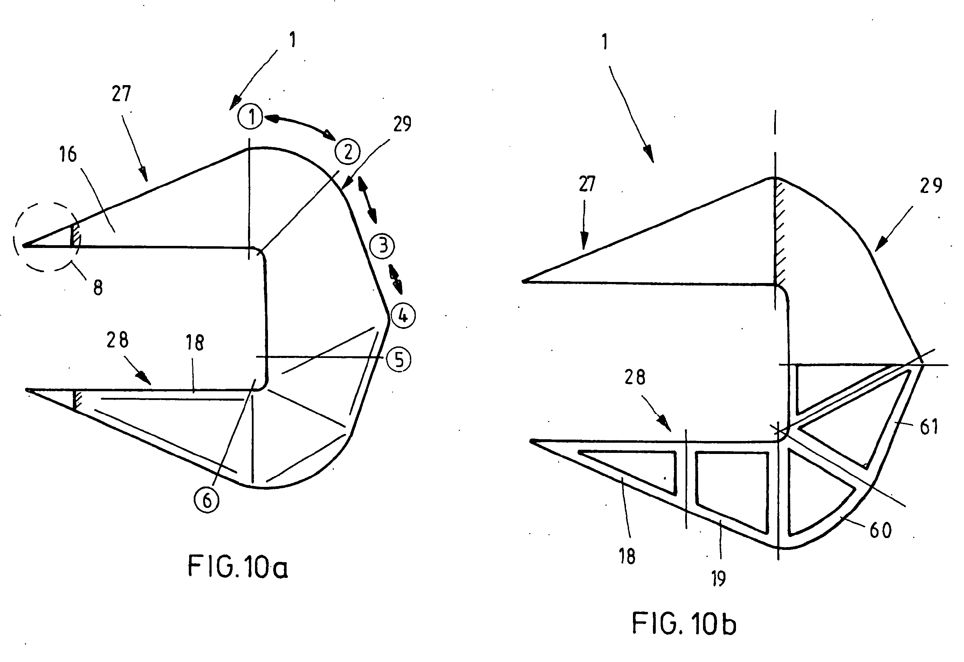

In dem Sinne ist in der Figur 10a ein Werkzeughalter 1 gezeigt, der als Zangenarm jeweils ein Modul 16 bzw. ein Modul 18 (teilweise in Fachwerkstruktur 2) hat. Das Modul 16 bzw. 18 ist jeweils an dem starren Bügelrücken 29 fest und starr angebracht. Die Module 16,18 sind mit einer Ausrichtungsstruktur ausgelegt, so dass die Werkzeughaltebereiche 8,9 auch unter Verformung im wesentlichen bis vollständig parallel zueinander bzw. die daran (hier nicht gezeigt) angebrachten Werkzeuge in einer gemeinsamen Flucht ausgerichtet bleiben. In der Figur 10a geben die Ziffern 1,2,3,4,5,6, jeweils im Kreis, beispielhaft an, an welcher Stelle jeweils die Bereiche eines starren Bügelrückens und eines entsprechend flexibel und insbesondere als Ausrichtungsstruktur ausgelegten Zangenarmes aneinander grenzen können.

Beliebig ausgeführte Schnittstellen zwischen Zangenarm und Bügelrücken sind denkbar. Prinzipiell kann der Werkzeughalter auch ohne Bügelrücken ausgelegt sein, und der ganze Rahmen als Ausrichtungsstruktur. Der Bügelrücken 29 ist nicht in Ausrichtungsstruktur ausgeführt, sondern im wesentlichen starr und unter der Betriebskraft kaum bis gar nicht elastisch verformt ausgeführt. Für die spätere Berechnung/Auslegung des Gesamtverhaltens der Zange ist die Kenntnis des Verformungsgrades des Bügelrückens von Bedeutung.

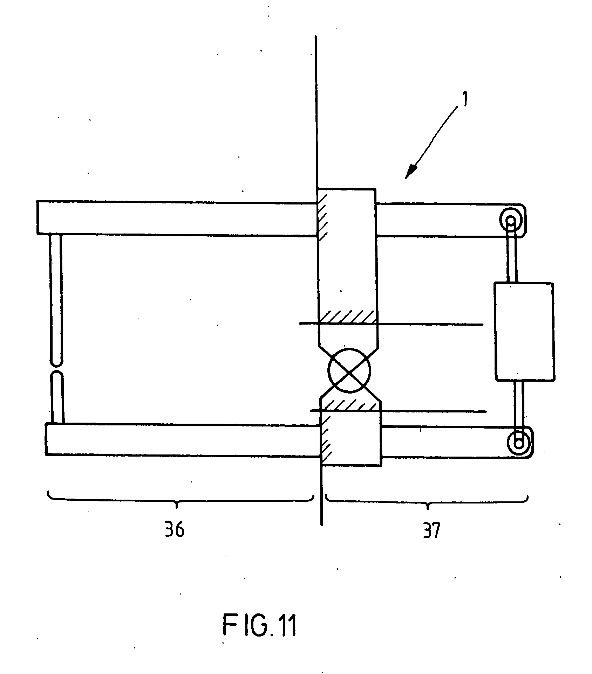

In Figur 11 ist ein Werkzeughalter 1 in X-Form gezeigt, bei dem auf der Werkzeugseite 36 beide Zangenarme - gegebenenfalls modular - in Ausrichtungsstruktur gebaut sind. Auf Antriebsseite 37 ist diese Auslegung nicht zwingend erforderlich bzw. unwichtig bzw. von untergeordneter Bedeutung für das Verformungsverhalten auf der Elektroden-/Werkzeugseite und damit das Fügeergebnis.

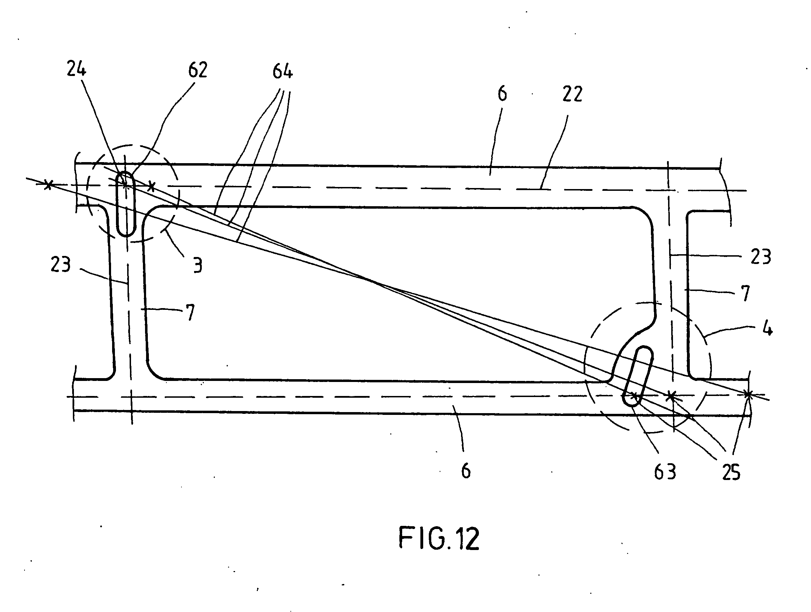

Der in der Figur 12 gezeigte Rechteckausschnitt einer Fachwerkstruktur 2 hat jeweils in einander diagonal gegenüberliegenden Knotenbereichen 3,4 ein Langloch 62 bzw. 63 (das Langloch könnte auch als Schwenkbohrung bezeichnet werden). Je nach Ausrichtung einer (nicht physikalisch gezeigten) Diagonalstrebe, welche praktisch diagonal zwischen den Knotenbereichen 3,4 in einer bestimmten Schwenkausrichtung anzubringen ist, liegt eine konventionelle Struktur oder eine Ausrichtungsstruktur vor, wobei die Asymmetrie, d. h. der Grad der " Außermittigkeit " der Strebenmittellinien 64 innerhalb der durch die Langlöcher 62,63 vorgegebenen Grenzen einstellbar ist. Damit kann die Struktur bedarfsweise als konventionelle Struktur oder Ausrichtungsstruktur - an den jeweiligen Anwendungsfall angepasst werden.

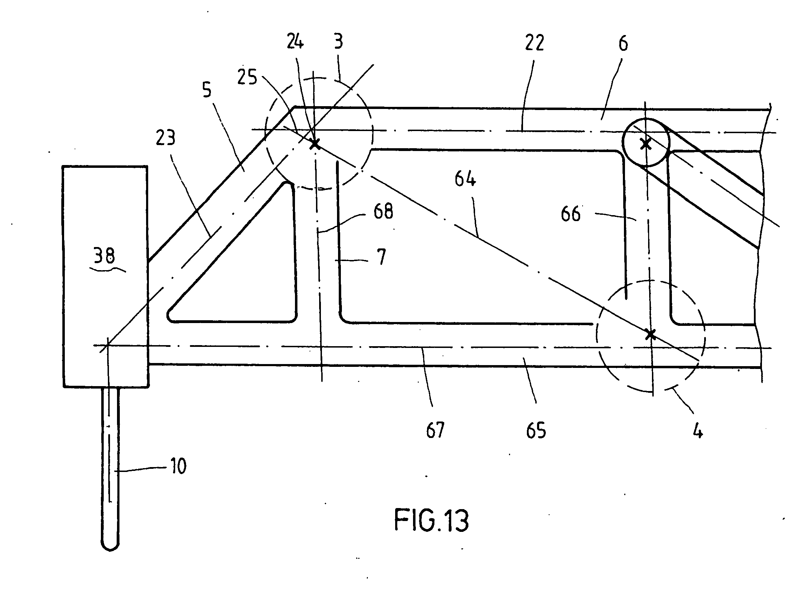

In der Figur 13 ist ein Abschnitt eines Werkzeughalters 1 beispielsweise als Ausschnitt gezeigt. An einem Endabschnitt (in der Figur 13 links) ist ein Antrieb 38 mit dem Werkzeug 10 angebracht. Die eingezeichnete Strebenmittellinie 64 einer (nicht physikalisch gezeigten) Diagonalstrebe schneidet sich mit der Mittellinie 22 der Längsstrebe 6 außerhalb der Mitte bzw. außerhalb eines Mittelbereiches des Knotenbereiches 3. Das Gleiche gilt für den diagonal dem Knotenbereich 3 gegenüberliegenden Knotenbereich 4. Dadurch ist eine an den Anwendungsfall angepasste Ausrichtungsstruktur gegeben, die dafür sorgt, dass die Ausrichtung des Werkzeugs 10 auch unter der Verformung/Belastung mit der Betriebskraft praktisch erhalten bleibt.

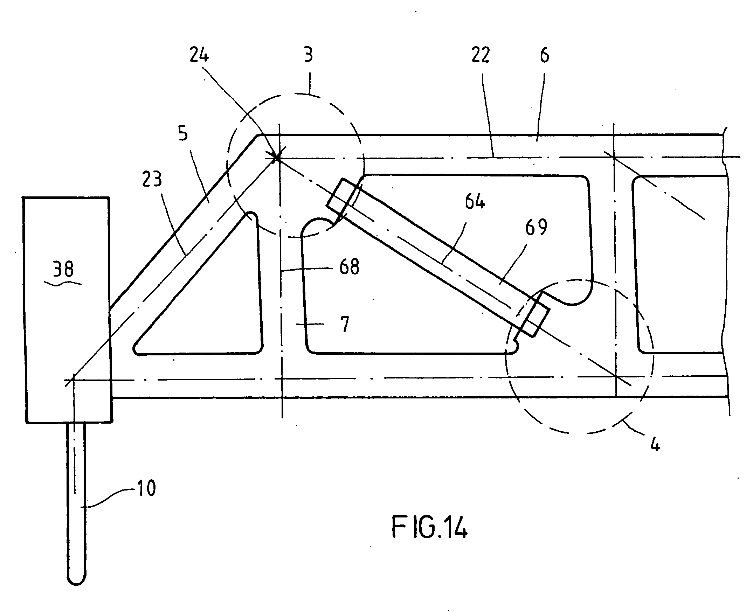

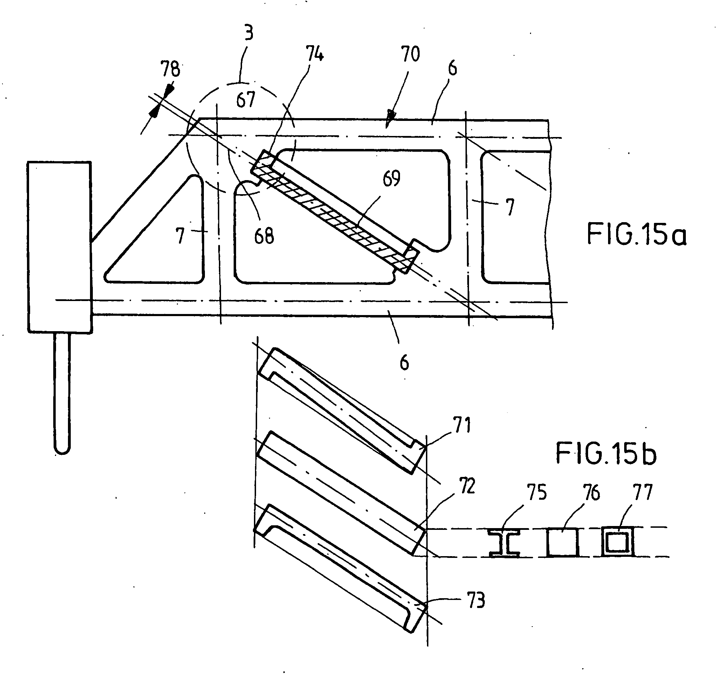

Figur 14 zeigt ein in eine Aufnahme in einem Knotenbereich 3,4 eingesetztes Diagonalstrebenelement 69. Dieses ist in konventioneller und nicht in Ausrichtungsstruktur eingesetzt. Die Knotenbereiche 3,4 sind verstärkt, d.h. vergrößert ausgeführt, um ausreichende Steifigkeit und ausreichend Material für die Einbringung der Aufnahmen (Strebenfassung, s.u. bei Fig. 15a) für ein solches Diagonalstrebenelement 69 zu bieten.

Figur 15a zeigt ein in eine Strebenfassung 74 eingesetztes Diagonalstrebenelement 69. In der Figur 15a ist die Mittellinie 68 des Diagonalstrebenelementes 69 der Art verschoben, dass sich eine Ausrichtungsstruktur mit einem Versatz der Schnittpunkte bzw. einer außermittigen Ausrichtung der Schnittpunkte wie in der Figur 15a am Knotenbereich 3 gezeigt, ergibt. Dies wird durch einen gegenüber dem Fassungsbereich des Diagonalstrebenelementes, das in der Strebenfassung 74 sitzt, versetzten bzw. asymmetrisch angeordneten Längsverlauf des Längsabschnittes des Diagonalstrebenelementes 69 erreicht. In Figur 15b sind beispielhaft mehrere Ausführungsvarianten von solchen Diagonalstrebenelementen 71,72,73 und deren Querschnitte 75,76,77 gezeigt. Die Verkippstrebe 71 bietet in ihrem Sitz in der Strebenfassung 74 eine gegenüber einer diagonal von Schnittpunkt links oben zu Schnittpunkt rechts unten von jeweils Längsstrebe 6 und Querstrebe 7 verlaufenden Mittellinie verkippte Mittellinie. Die Geradstrebe 72 bietet einen konventionellen Aufbau, könnte aber beispielsweise auch durch veränderlichen, unsymmetrischen Aufbau des Strebenquerschnittes für die favorisierte Ausrichtungsstruktur genutzt werden. Die Versatzstrebe 73 schließlich bietet eine nicht verkippte, sondern parallel zu der Diagonale zwischen den obengenannten Schnittpunkten versetzt verlaufende Mittellinie. Die Verkippstrebe 71 und die Versatzstrebe 73 sowie die in Figur 15a gezeigte Versatzstrebe 69 bieten - bei symmetrischer Anordnung der Strebenfassungen 74 - eine Ausrichtungsstruktur, die je nach vorhandenen Elementen (z. B. eines Bausatzes aus verschiedenen Streben) - insbesondere hinsichtlich ihrer Verformungseigenschaften - angepasst werden kann. Zusätzlich sind in Figur 15b noch mögliche Querschnitte der Streben gezeigt, so z. B. ein Doppel-T-Querschnitt 75, ein Vollmaterial-Rechteckquerschnitt 76 und ein Hohlrohrquerschnitt 77 (der beispielsweise quadratisch ausgeführt ist).

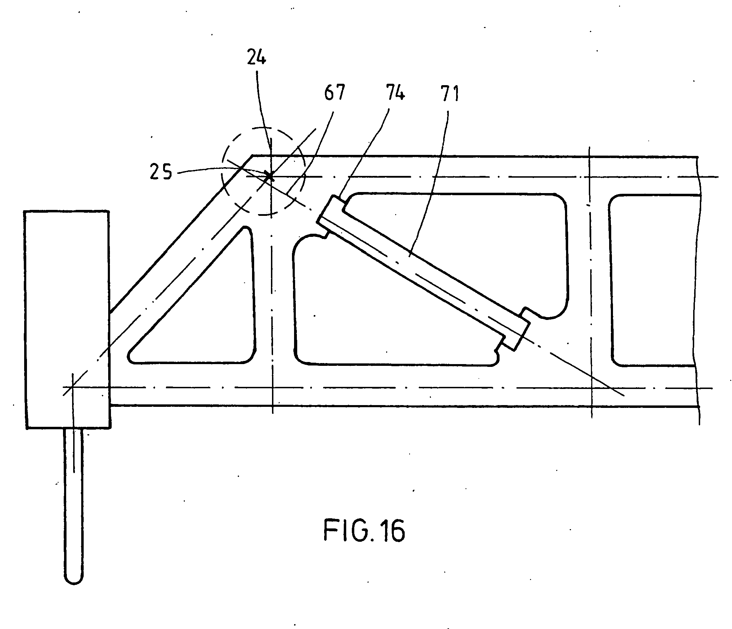

Figur 16 zeigt die außermittige Ausrichtung der Schnittpunkte 25 bezüglich des Schnittpunktes 24 bei dem Einsatz einer Verkippstrebe vom Typ 71 in die Strebenfassung 74.

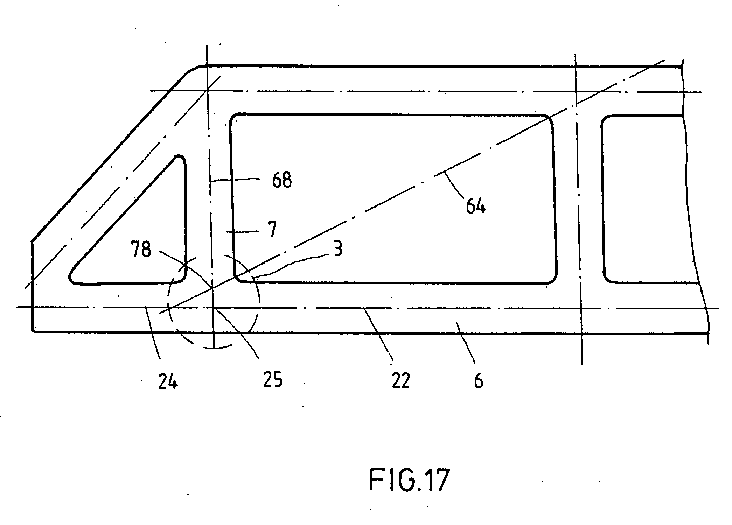

Lediglich schematisch ist in Figur 17 nochmals wiederholt dargestellt, dass die Strebenmittellinie 64 einen Schnittpunkt 24 mit einer Mittellinie 22 einer Längsstrebe 6 hat, die außerhalb der (physikalischen und/oder geometrischen) Mitte des in Figur 17 gezeigten Knotenbereiches 3 angeordnet ist, und dadurch ein Modul gebildet wird, welches eine Ausrichtungsstruktur bietet. Der Schnittpunkt 24 liegt außerhalb der Mitte des Knotenbereiches 3. Dies bedeutet auch, dass er gegenüber dem Schnittpunkt 25 der Mittellinie 68 der Querstrebe 7 und der Mittellinie 22 der Längsstrebe 6 zum Werkzeug (hier nicht gezeigt) hin, also nach außerhalb der Zangenöffnung verschoben ist. Dadurch ergibt sich unter der Belastung mit der Elektrodenkraft die gewünschte Verformung, die eine Ausrichtungsstruktur bietet.

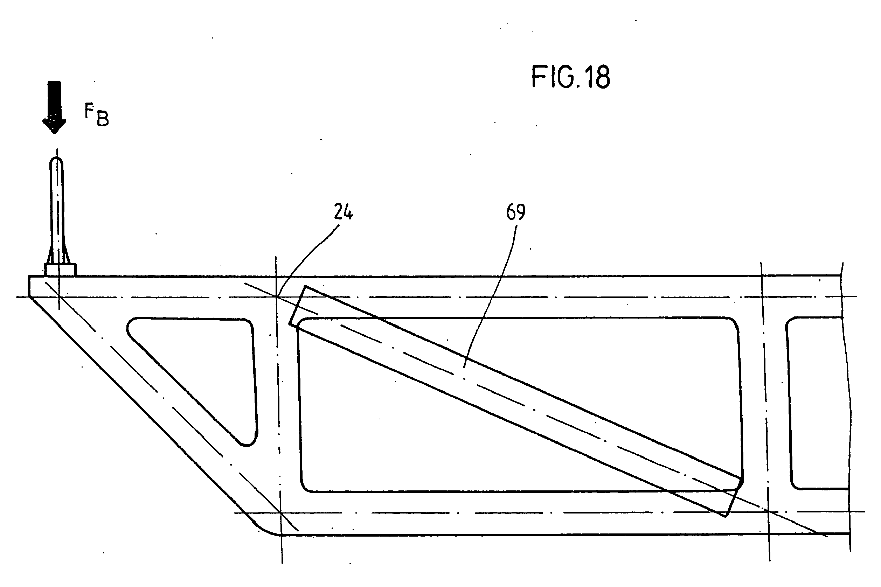

In Figur 18 ist ein (lediglich schematisch angedeutetes) Diagonalstrebenelement 69 in konventioneller Ausrichtung gezeigt, so dass sich die drei betroffenen Mittellinien in einem Schnittpunkt 24 schneiden.

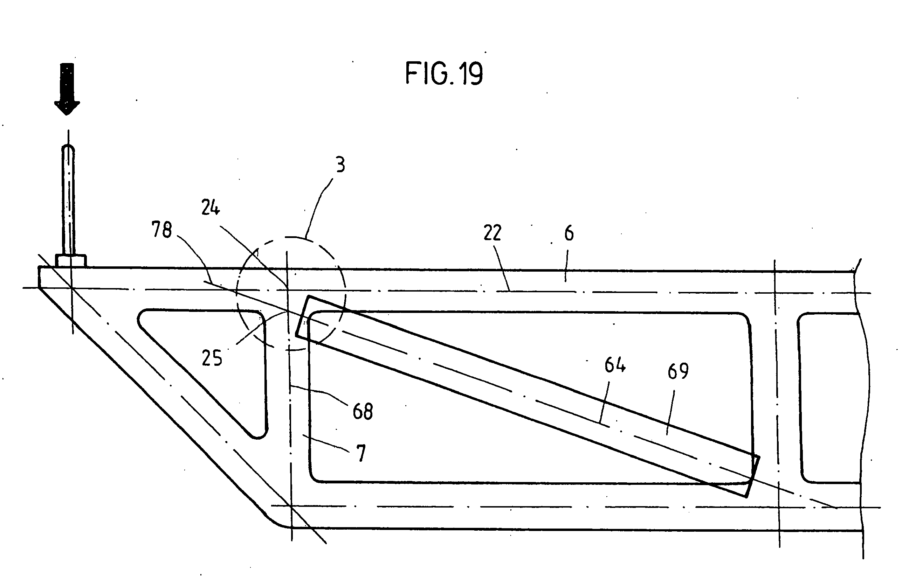

Desgleichen ist in Figur 19 ein (lediglich schematisch angedeutetes) Diagonalstrebenelement 69 gezeigt, dessen Mittellinie 64 sich mit der. Mittellinie 22 des Längsstrebenelementes 6 außermittig des Knotenbereiches 3 schneidet. Dadurch ist eine Ausrichtungsstruktur gegeben.

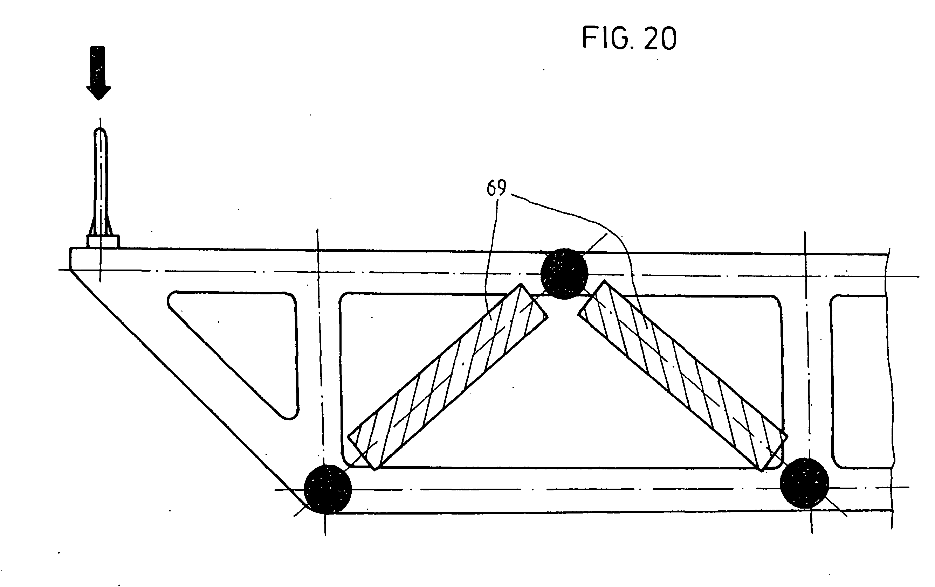

In Figur 20 sind - in praktisch konventioneller Struktur - zwei Diagonalstrebenelemente 69 innerhalb eines Rechteckelements vorgesehen.

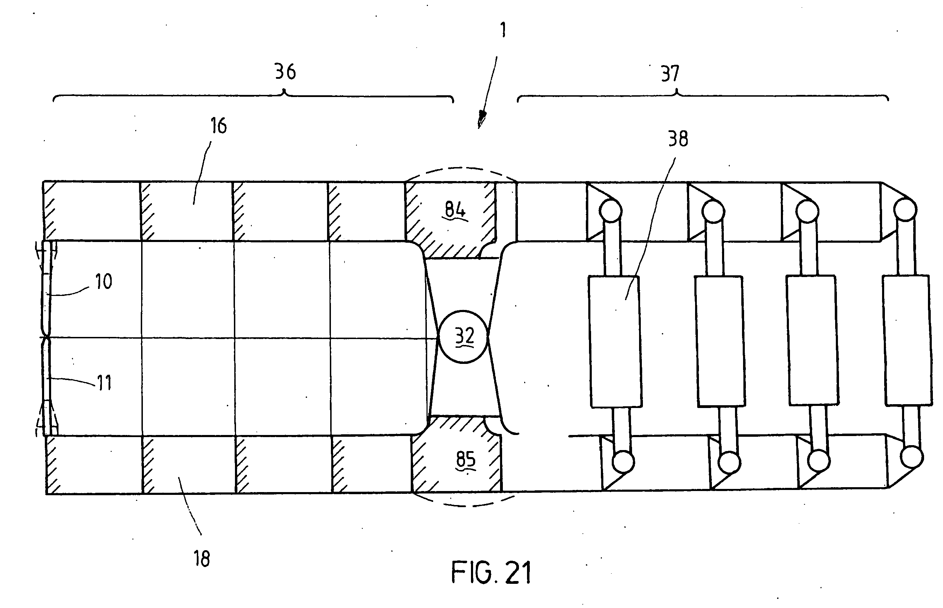

Figur 21 zeigt einen Werkzeughalter 1 in X-Form, wobei dieser gemäß der Figur 21 nach einem Baukastensystem aufgrund der Geometrieanforderungen der Schweißaufgabe ausgelegt sein kann. Dazu sind Module (beispielhaft gezeigt) 16,18 vorhanden. Die Zangenarme auf der Elektrodenseite 36 (das ist die Werkzeugseite) sind modular nach der Ausrichtungsstruktur ausgelegt und bieten damit eine praktisch fluchtende Ausrichtung der Werkzeuge 10,11 auch unter der Belastung mit der Betriebskraft. Dadurch wird ein gutes Arbeitsergebnis erzielt, da das Verformungsverhalten der Zangenarme von Bedeutung für das Bearbeitungsergebnis, z. B. Schweißergebnis, Füge- oder sonstige Montageergebnis ist. Die Zangenarme auf der Antriebsseite 37 können konventionell oder in einer Ausrichtungsstruktur angelegt sein. Die gezeigten Knotenelemente 84,85 können ebenfalls konventionell, dann vorzugsweise starr, oder in Ausrichtungsstruktur ausgelegt sein. Das Lager 32 bleibt unverändert, aber die Anbindung (die Module) zwischen Lagerstelle und den jeweiligen Zangenarmen können konventionell oder nach Ausrichtungsstruktur ausgelegt werden. Dabei ist das Zusammenwirken auf Elektrodenseite aus starren Elementen und definiert elastisch verformbaren Elementen relevant.

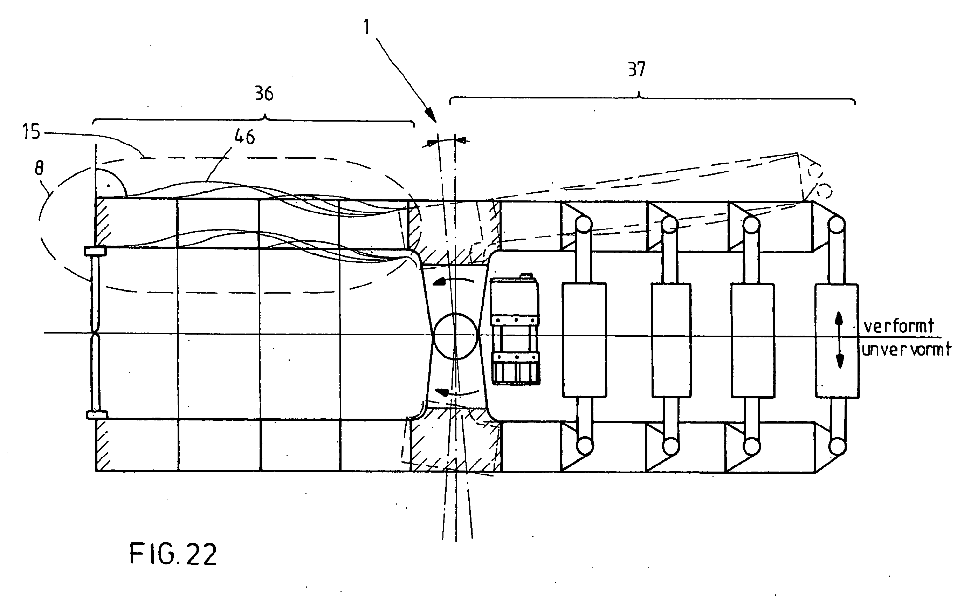

Daraus ergibt sich das Verformungsverhalten mit der Verformungsstruktur und der Verformungskontur 46, wie in Figur 22 gezeigt, auf der Werkzeugseite 36. Die Verformungskontur 46 weist einen oder mehrere, mathematische Wendepunkte auf, so dass sich der entsprechende Zangenarm elastisch scheinbar "verkürzt" und die Ausrichtung des Werkzeughaltebereichs (hier durch ein Symbol für einen rechten Winkel angedeutet) praktisch gleich bleibt.

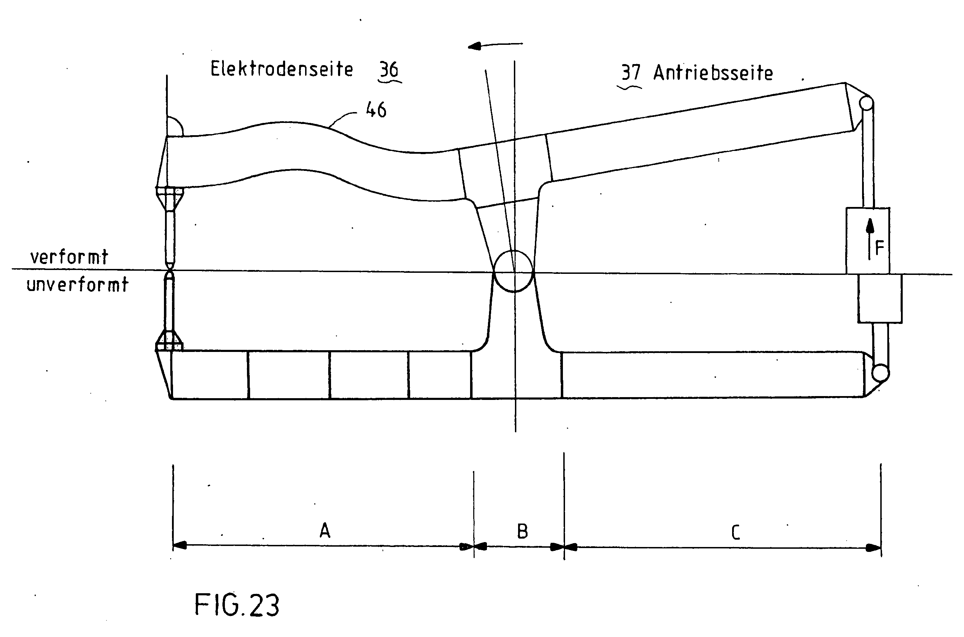

Schematisiert ist in Figur 23 zu sehen, dass auf der Elektrodenseite im Bereich A eine Ausrichtungsstruktur vorliegt, im Bereich B eine Ausrichtungsstruktur oder eine konventionelle Struktur, und im Bereich C eine konventionelle Struktur vorliegt, da es nicht sinnvoll bzw. zwingend erforderlich für das Schweiß-/Füge-/Montage-/Handlingsergebnis ist, in diesem Bereich C eine Ausrichtungsstruktur vorzusehen.

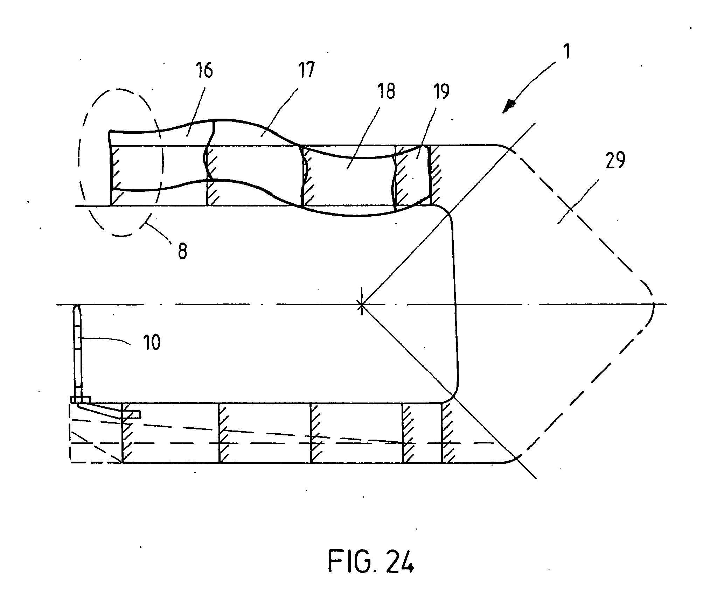

Schließlich zeigt die Figur 24 verschiedene Module 16,17, 18,19, die sich in Ausrichtungsstruktur gehalten verformen und dadurch die gezeigte Kontur ergeben, so dass auch hier im Ergebnis die Ausrichtung des Werkzeughaltebereichs 8 und damit des Werkzeuges 10 () beibehalten wird. Der Bügelrücken 29, z.B. einer C-Zange als Werkzeughalter 1, kann dabei starr, konventionell ausgeführt sein und muss nicht nach dem Prinzip der Ausrichtungsstruktur ausgelegt sein. Dies erleichtert die Standardisierung/Modularisierung durch die Notwendigkeit der Anpassung an die jeweiligen (Füge-)Aufgaben und führt zu Kostenreduzierungen, ermöglicht das Retooling von Anlagern und den Re-Use der Anlagen beim Kunden/OEM.

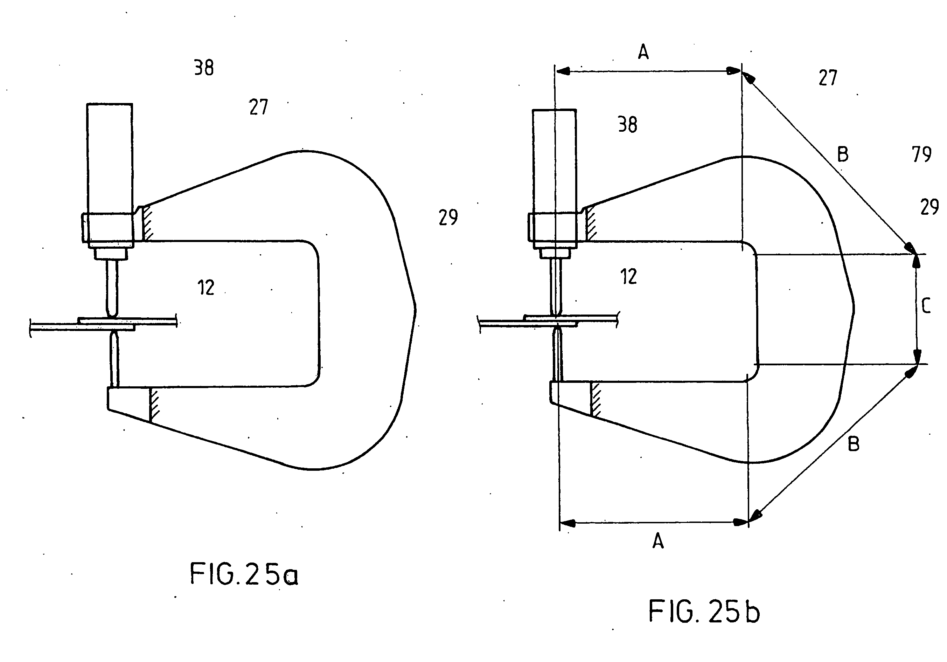

In Figur 25a und 25b ist ein Auslegungsbeispiel gezeigt. Im Bereich A liegt eine Ausrichtungsstruktur vor, im Bereich der Bügeleckknoten 79 kann eine Ausrichtungsstruktur vorliegen; die Bügeleckknoten 79 im Bereich B können aber auch in konventioneller Struktur ausgelegt sein. Der Bügelrücken 29 im Bereich C ist konventionell starr ausgelegt. Grundsätzlich kann der gesamte Rahmen nach der Ausrichtungsstruktur, einteilig bzw. einstückig ausgelegt werden, in der Praxis wird der Rahmen aber aus Flexibilitätsgründen mehrteilig ausgeführt werden. Wichtig ist das bekannte, definierte, kalkulierte und reproduzierbare Zusammenspiel aller beteiligten Geometrieelemente bzw. mechanischen Elemente für das Schweißergebnis, an dem die Performance und damit das mechanische Verhalten hinsichtlich an die Fügeaufgabe(n) angepaßter Aufbiegung und Nachsetzverhalten der Fügezange letztlich gemessen wird.

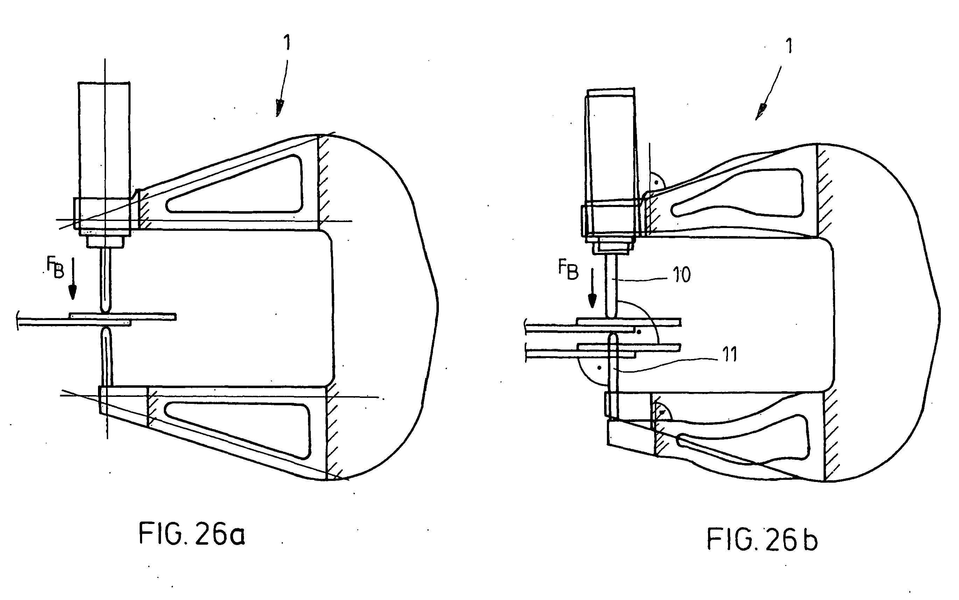

Das Ergebnis einer Auslegung gemäß der Erfindung in Ausrichtungsstruktur ist in den Figuren 26a und 26b unter der Belastung mit der Betriebskraft dargestellt. Man erkennt, dass sich der Werkzeughalter 1 in Figur 26b im Bereich der Zangenarme der Art verformt, dass im Ergebnis die Ausrichtung der Werkzeuge 10,11 gleich bleibt - vorzugsweise senkrecht zur Fügestelle.

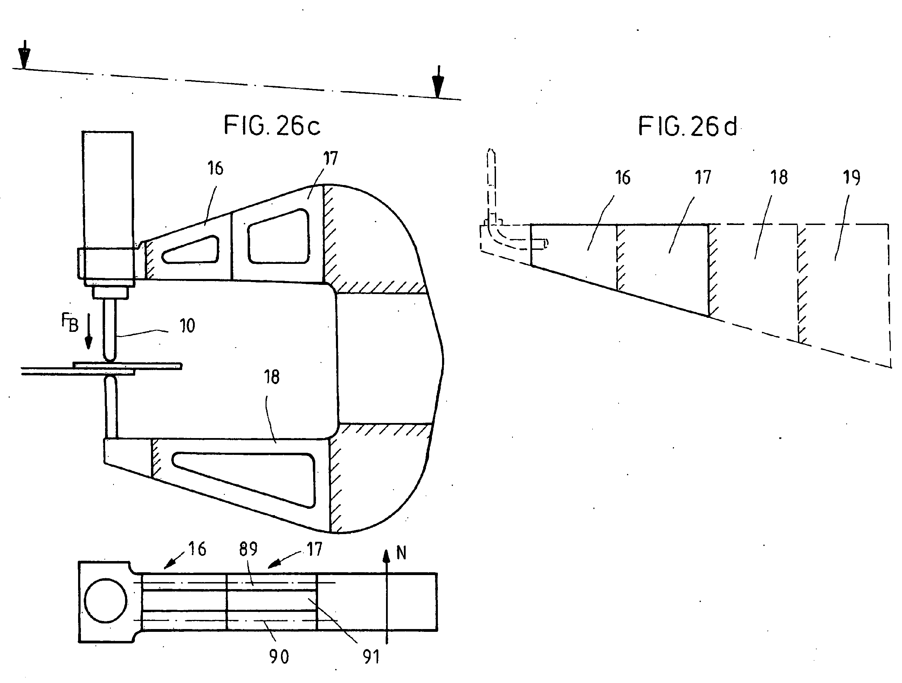

Figur 26c zeigt, dass beispielsweise der obere Zangenarm aus zwei Modulen 16, 17 bestehen kann, und beispielsweise der untere Zangenarm aus lediglich einem Modul 18 (und umgekehrt). Es kann auch vorgesehen sein, dass unterer und oberer Zangenarm aus einem Modul oder aus zwei oder mehr Modulen aufgebaut sein kann. Fig. 26d zeigt einen flexibel einsetzbaren, aus mehreren Modulen 16,17,18,19 zusammengesetzten Zangenarm mit möglichen Schnittstellen zwischen den Modulen und verschiedensten Ausführungsformen der Elektroden/-schäfte.

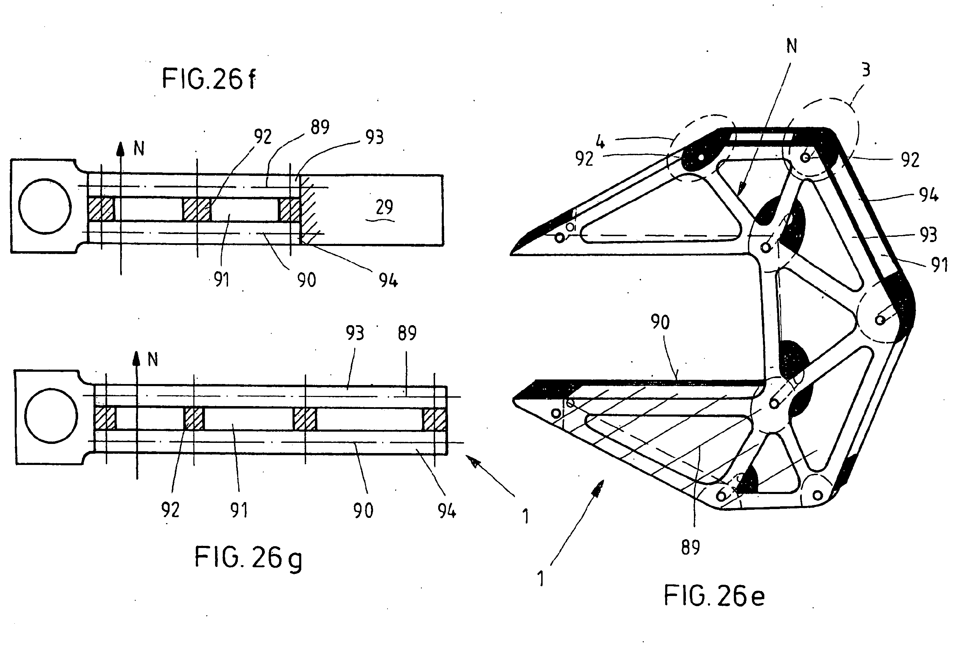

Fig. 26e zeigt eine perspektivische Seitenansicht eines Werkzeughalters 1, bei dem die Fachwerkstruktur zwei übereinander angeordnete, praktisch deckungsgleiche Fachwerkebenen 89, 90 (in Fig. 26e ist die Fachwerkebene 89 durch eine Teilschraffur und die (teilweise verdeckte) Fachwerkebene 90 durch einen Halbpfeil markiert) aufweist, die in Deckung und durch einen Zwischenraum 91 in Normalenrichtung N der Fachwerkebenen 89, 90 voneinander beabstandet miteinander beispielsweise durch Abstandsstifte 92 verbunden sind.

Durch den Zwischenraum 91 sind, insbesondere zum Werkzeughaltebereich, Kabel oder Leitungen für elektrischen Strom und/oder Leitungen/Schläuche für ein Kühlfluid durchzuführen.

Die Fachwerkebenen 89,90 sind durch Fachwerkschichten 93,94 realisiert. Die Fachwerkschichten 93,94 können aus Einzelblechen oder aus Sandwichblechen bestehen. Die Fachwerkschichten 93,94 sind durch in einigen oder allen Knotenbereichen 3,4 angeordnete Abstandsstifte 92 miteinander verbunden, so daß sie praktisch deckungsgleich übereinanderliegen. An der Stelle der gezeigten Schraffur für die obere Fachwerkebene 89 kann auch ein Abdeckblech zur Abdeckung und/oder zum Abschluss des Zwischenraums 91 vorhanden sein (entweder einseitig oder vorzugsweise auf beiden Außenseiten der Fachwerkschichten 93,94.

Fig. 26g zeigt eine Draufsicht auf das Ausführungsbeispiel der Figur 26e. Dabei ist zu sehen, dass praktisch der ganze Werkzeughalter 1 aus der Fachwerk-Schichtstruktur 93,94 besteht. Ein anderes Ausführungsbeispiel mit einem massiven oder hohl abgeschlossenen, strukturell steifen Bügelrücken 29 zeigt Fig. 26f.

Figur 27 zeigt einen Werkzeughalter 1 in X-Form. Im Bereich A (Zangenarme) ist zur Erreichung einer vorgegebenen Performance, also z. B. einer vorgegebenen Schweißgüte, eine Ausrichtungsstruktur vorgesehen, im Bereich B kann eine Ausrichtungsstruktur, aber auch eine konventionelle Struktur vorgesehen sein. Schließlich kann im Bereich C eine konventionelle, starre und/oder steife Struktur vorgesehen sein. Wichtig ist das bekannte, definierte, kalkulierte und reproduzierbare Zusammenspiel aller beteiligten Geometrieelemente bzw. mechanischen Elemente für das Schweißergebnis, an dem die Performance und damit das mechanische Verhalten hinsichtlich an die Fügeaufgabe(n) angepaßter Aufbiegung und Nachsetzverhalten der Fügezange letztlich gemessen wird.

Die Verformungsgeometrien sind in den Figuren 28a und 28b gegenübergestellt, wobei der Werkzeughalter in Figur 28b nach der Ausrichtungsstruktur ausgelegt ist und damit die Ausrichtung der Werkzeuge 10,11 auch unter der Verformungskraft untereinander erhalten bleibt. In Bild 28a wird der Stand der Technik dargestellt.

Figur 29 zeigt Federn und/oder Dämpfer, also mechanische Wirkelemente 80, die nach Art einer Diagonalstrebe in die Module 16, 17,18 eingebracht sind. In dem gezeigten Ausführungsbeispiel kann durch die mechanischen Wirkelemente 80 eine Funktionalität bzw. ein Verhalten nach Art einer Ausrichtungsstruktur erzielt werden und das mechanische Verhalten der Zange (Aufbiegung, Nachsetzverhalten,...) gezielt eingestellt werden.

Schließlich zeigt Figur 30 ein in das Modul 17 eingesetztes, mechanisches Wirkelement 80, welches nicht diagonal, sondern parallel zu den Längsstreben des Moduls 17 praktisch mittig eingesetzt ist, also ohne Einbindung von Knotenpunkten ein mögliches Verformungsverhalten nach dem Ausrichtungsstruktur-Prinzip (nicht notwendig, kann auch konventionell ausgelegt sein) unter Wirkung der Elektrodenkraft bieten kann.

Fig. 31a und 31b zeigen jeweils eine Seitenansicht auf ein Ausführungsbeispiel mit einem einseitigen, d.h. einarmigen Werkzeughalter 1, und zwar Fig. 31 a unverformt (d.h. praktisch ohne Krafteinwirkung) und Fig. 31b sowohl unverformt als auch verformt, also ohne und mit Einwirkung der Betriebskraft F_{B}. Der gezeigte Zangenarm ist in Ausrichtungsstruktur ausgelegt.

Dazu schneiden sich jeweils zwei Wirklinien der Längsstreben des Typs 65 außermittig bezüglich des Knotenbereichs 4 bzw. 3 (siehe Fig. 31 a) und damit jeweils nicht mit der Wirklinie der Elektroden- bzw. Betriebskraft WLE (in Knotenbereich 4) bzw. der Wirklinie der Lager-/Abstützkraft des Roboters WLIR (in Knotenbereich 3) in einem gemeinsamen Schnittpunkt.

Die Wirklinie der Betriebskraft F_{B} bzw. der Abstützkraft des Roboters FIR liegt nach innerhalb verschoben gegenüber dem Schnittpunkt der Wirklinien der oberen Strebe 65 und der unteren Strebe 65.

Das Konzept des einarmigen Werkzeughalters kann z.B. vorteilhaft verwendet werden
- bei großem Abstand zwischen WLIR und WLE (siehe Fig. 31 a)
- bei großer Ausladung der Fügezange; daraus resultiert ein großes Gewicht der Zange, so dass bei konventioneller, zweiarmiger Zange das Gewicht der Zange die Traglast des Industrieroboters IR übersteigen könnte
- nur einseitig möglicher Zugänglichkeit der Fügestelle.

Durch die kompakte Bauweise des dargestellten Antriebes wird die Zugänglichkeit des Fügewerkzeuges überhaupt erst möglich. Ein dabei verwendeter Roboter kann effektiver arbeiten, weil er außerhalb eines z.B. Fahrzeugs, in dem die Schweißstelle angeordnet ist, eine günstigere Grundstellung einnimmt und höher belastet werden kann und durch Hebelarm zum dargestellten Antrieb überhaupt erst an die Fügestelle kommt, um die erforderliche Kraft aufbringen zu können.

Fig. 31b zeigt die Konfiguration unter Einwirkung der Betriebskraft F_{B} grob schematisch und hinsichtlich der Verformung der Deutlichkeit halber übertrieben dargestellt. Die Schweißelektrode ist an der Abstützstruktur 88 abgestützt. Man erkennt, dass sich aufgrund der Ausrichtungsstruktur Momente einstellen, die eine "wellenartige" Verformung, also eine Verformungskontur mit entsprechender rein elastischer "Verkürzung" ergibt, wobei aber die parallele und fluchtende Ausrichtung der beiden gegenüberstehenden Elektroden erhalten bleibt. Dieses Verhalten ist sehr wichtig beispielsweise bei Schraub- oder Einpreßelementen, Stanznietelementen und Clinchverbindungen/-napfen, die senkrecht gefügt bzw. gesetzt werden müssen, um eine bestmögliche Performance der Elemente zu erzielen und ist auch für den Schweißprozeß nicht unwichtig bzw. sogar vorteilhaft/wünschenswert. Das Gegenwerkzeug zum dargestellten Werkzeug, bei beidseitigen Fügeprozessen beispielsweise die Elektrode beim Widerstandspunktschweißen, die Matrize oder der Stempel (!) beim Clinchen oder Stanznieten - je nach Fügerichtung, ist Bestandteil der dargstellten Füge-/Montagestelle und befindet sich im gezeigten Beispiel unterhalb der Fügestelle. Auf die Darstellung dieser Werkzeuge wurde bewußt verzichtet, da das einseitige Konzept mit der Ausrichtungsstruktur für verschiedenenartigste Prozesse verwendet werden oder auf diese übertragen werden kann. Ein derartiges Konzept kann sogar beispielsweise auf die Radlagerung bei Kraftfahrzeugen übertragen werden und beispielsweise auf spanende Prozesse wie Bohren oder Fräsen übertragen werden (Beispiel: große Ständerbohrmaschinen für die Flugzeugindustrie, oder Werften (Schiffsbau)...). Prinzipiell kann auch das nicht in den Figuren 31 a bzw. 31 b dargestellte Werkzeug in der Abstützstruktur 88 angetrieben werden und der dargestellte Arm als fixes Gegenwerkzeug dienen. Der als Verlängerung des Roboterarms dargestellte Zangenarm kann auch Bestandteil eines Spann- und Fixierkonzeptes sein und muß nicht zwingend angetrieben werden.

Fig. 32 zeigt eine Seitenansicht eines Werkzeughalters 1 (C-Bügel), bei dem mögliche - bevorzugte - Positionen 87 für die Anordnung eines Ultraschall-Elements gezeigt sind. Die Ultraschall-Elemente sind in diesem Bereich angeordnet, also bezüglich des Ausführungsbeispiels 1 im Kreis oben in oder an dem Elektrodenschaft oder oberhalb des Elektrodenschafts in der Aufnahme für den Schaft. Das gleiche gilt entsprechend für die untere Elektrode 53. Im Ausführungsbeispiel 2 im Kreis ist die untere Elektrode gekröpft. Bei allen möglichen Elektroden/-schaftgeometrien - inklusive der gekröpften Elektroden - kann das Ultraschallelement sowohl in der Aufnahme als auch im Schaft platziert werden. In den Figuren ist jeweils die bevorzugte Positionierung dargestellt.

Bei den gezeigten Anordnungen werden auf diese Weise gute Voraussetzungen geschaffen, die Schweißlinse 86 jeweils mit dem Ultraschall bestmöglich zu durchschallen.

Fig. 33 zeigt eine Seitenansicht eines Werkzeughalters 1 (X-Zange), bei dem ebenfalls mögliche Positionen 87 für die Anordnung eines Ultraschall-Elements gezeigt sind. Die Ultraschall-Elemente sind in diesem Bereich 87 angeordnet, also bezüglich des Ausführungsbeispiels 1 im Kreis oben in oder an dem Elektrodenschaft oder oberhalb des Elektrodenschafts in der Aufnahme für den Schaft. Das gleiche gilt entsprechend für die untere Elektrode 53. Im Ausführungsbeispiel 3 im Kreis ist die untere Elektrode gekröpft, und der Bereich erstreckt sich von der Aufnahme der Elektrode 53 bis lediglich vor den abgewinkelten Teil. Im Ausführungsbeispiel 2 im Kreis sind beide Elektroden 53 gekröpft, und der Bereich erstreckt sich jeweils von der Aufnahme der Elektrode 53 bis lediglich vor den abgewinkelten Teil.

Bei den gezeigten Anordnungen werden auf diese Weise gute Voraussetzungen geschaffen, die Schweißlinse 86 jeweils mit dem Ultraschall bestmöglich zu durchschallen.

### Bezugszeichenliste

- 1: Werkzeughalter
- 2: Fachwerkstruktur
- 3: Knotenbereich
- 4: Knotenbereich
- 5: Schrägstrebe/Diagonalstrebe
- 6: Längsstrebe
- 7: Querstrebe
- 8: Werkzeughaltebereich
- 9: Werkzeughaltebereich
- 10: Werkzeug, Schweißelektrode
- 11: Werkzeug, Schweißelektrode
- 12: Werkstück, Blech
- 13: Teilbereich
- 14: Teilbereich
- 15: Verformungsbereich
- 16: Modul
- 17: Modul
- 18: Modul
- 19: Modul
- 20: Basisabschnitt des Werkzeughalters
- 21: Verschraubung, Schnittstelle, beispielsweise mechanisch oder stoffschlüssig
- 22: Mittellinie
- 23: Mittellinie
- 24: Schnittpunkt der Mittellinien
- 25: Schnittpunkt der Mittellinien
- 26: C-Grundriss
- 27: C-Schenkel
- 28: C-Schenkel
- 29: Bügelrücken
- 30: X-Grundriss
- 31: Kreuzungsstelle
- 32: Lagerstelle/Gelenk
- 33: frei
- 34: frei
- 35: frei
- 36: Werkzeugseite
- 37: Antriebsseite
- 38: Antrieb
- 39: Anlenkung
- 40: Anlenkhebel
- 41: Erstes, in diesem Fall oberes Stichmaß
- 42: Zweites, in diesem Fall unteres Stichmaß
- 43: Ausladung
- 44: Strebe
- 45: Schweißtransformator
- 46: Verformungskontur
- 47: Feder-/Dämpfungsmittel, Maschinenelement
- 48: Vertikale Zangenöffnung ohne Anpreßkraft
- 49: Vertikale Zangenöffnung mit Anpreßkraft
- 50: Verschiedenste Ausführungsformen einer Schweißelektrode
- 51: Verschiedenste Ausführungsformen einer Schweißelektrode
- 52: Verschiedenste Ausführungsformen einer Schweißelektrode
- 53: Gekröpfte Schweißelektrode
- 54: Elektrodenseite
- 55: Antriebsseite
- 56: Werkzeugachse
- 57: Schrägmodul
- 58: Schrägmodul
- 59: langes Geradmodul
- 60: Rückenmodul
- 61: Rückenmodul
- 62: Langloch/Schwenkbohrung
- 63: Langloch/Schwenkbohrung
- 64: Strebenmittellinien
- 65: Längsstrebe
- 66: Querstrebe
- 67: Mittellinie
- 68: Mittellinie
- 69: Diagonalstrebenelement
- 70: Viereckselement
- 71: Verkippstrebe
- 72: Geradstrebe
- 73: Versatzstrebe
- 74: Strebenfassung
- 75: Doppel-T-Querschnitt
- 76: Vollmaterial-Rechteckquerschnitt
- 77: Hohlrohrquerschnitt
- 78: Schnittpunkt
- 79: Bügeleckknoten
- 80: mechanisches Wirkelement
- 81: Zangenarm
- 82: Zangenarm
- 83: Gegenüberliegende Seite
- 84: Knotenelement
- 85: Knotenelement
- 86: Schweißlinse
- 87: Bereich für Anordnung eines Ultraschall-Senders oder -Empfängers
- 88: Abstützstruktur/Füge-/Montage-/Schraub=/Einpreßstelle inklusive eventuell notwendigem Gegenwerkzeug, das prinzipiell auch angetrieben sein kann
- 89: Fachwerkebene
- 90: Fachwerkebene
- 91: Zwischenraum
- 92: Abstandsstift
- 93: Fachwerkschicht
- 94: Fachwerkschicht
- N: Normalenrichtung
- α₁: Winkelversatz am oberen Zangenarm
- α₂: Winkelversatz am unteren Zangenarm
- X: Relativversatz der Elektroden unter elastischer Verformung/Aufbiegung der Schweißzange

## Patentansprüche

1. Werkzeughalter (1), insbesondere für Anlagen für umformtechnische Fügeprozesse, insbesondere Clinchen und Stanznieten, sowie thermische Fügeprozesse wie Widerstandspunktschweißen, Handlingsprozesse, Prägeprozesse, Schraub- und Einpressprozesse, welcher
- zumindest abschnittsweise eine geometrische Fachwerkstruktur (2) mit Knotenbereichen (3, 4) aufweist, in denen Strebenelemente (5, 6, 7) der Fachwerkstruktur (2) starr miteinander verbunden sind,
- einen Werkzeughaltebereich (8, 9) hat, der ein Werkzeug (10, 11) hält, welches im Betrieb unter elastischer Verformung der Fachwerkstruktur (2) des Werkzeughalters (1) mit einer Betriebskraft gegen ein Werkstück (12) oder dgl. zu pressen ist; und
- eine derartige, resultierende Fachwerkstruktur (2) aufweist, dass bezüglich zumindest eines Knotenbereiches (3, 4) zumindest eine Mittellinie (22, 23) oder ein Abschnitt einer Mittellinie eines in diesen Knotenbereich (3, 4) einmündenden Strebenelementes (5, 6, 7) außermittig bezüglich des Knotenbereiches (3, 4) ausgerichtet ist und/oder der Schnittpunkt (24, 25) der Mittellinien (22, 23) oder von Abschnitten der Mittellinien (22, 23) zumindest zweier in diesen Knotenbereich (3, 4) einmündender Strebenelemente (5, 6, 7) außermittig bezüglich des Knotenbereiches (3, 4) angeordnet ist, so dass die strukturelle, resultierende außermittige Ausrichtung der geometrischen Strukturelemente durch die, insbesondere innere, Momentenverteilung unter der Einwirkung der Betriebskraft die Verformung der resultierenden Fachwerkstruktur im Sinne einer konstanten Ausrichtung des Werkzeughaltebereiches beeinflusst, **dadurch gekennzeichnet, dass** der Werkzeughalter (1) in zumindest einem Teilbereich (13, 14) eines elastisch zu verformenden Bereichs (15) der Fachwerkstruktur (2) zumindest zwei starr miteinander und eventuell mit Basisabschnitten (20) des Werkzeughalters (1) verbundene Module (16, 17, 18, 19) aufweist, wobei der Werkzeughalter (1) mit den verbundenen Modulen die genannte resultierende Fachwerkstruktur (2) aufweist, sowie zumindest ein Modul (16 - 19) selber.

2. Werkzeughalter nach Anspruch 1, **dadurch gekennzeichnet, dass** Module (16 - 19) lösbar miteinander und/oder ein Modul (16 - 19) lösbar mit Basisabschnitten (20) des Werkzeughalters (1) verbunden, insbesondere verschraubt (21), sind/ist.

3. Werkzeughalter nach Anspruch 1 oder 2, **dadurch gekennzeichnet, dass** Module (16 - 19) unlösbar miteinander und/oder ein Modul (16 - 19) unlösbar mit Basisabschnitten (20) des Werkzeughalters (1) verbunden, insbesondere stoffschlüssig verbunden, insbesondere verklebt, verschweißt oder verlötet, sind/ist.

4. Werkzeughalter nach einem der Ansprüche 1 bis 3, **dadurch gekennzeichnet, dass** der Werkzeughalter (1) mit den verbundenen Modulen (16 - 19) insgesamt praktisch eigensteif ausgebildet ist.

5. Werkzeughalter nach einem der Ansprüche 1 bis 4, **dadurch gekennzeichnet, dass** ein Modul (16 - 19) im Zusammenwirken mit einem anderen Modul (16 - 19) und eventuell im Zusammenwirken mit, insbesondere nicht modularen, Basisabschnitten (20) des Werkzeughalters (1) die gemäß Anspruch 1 resultierende Fachwerkstruktur (2) ergibt.

6. Werkzeughalter nach einem der Ansprüche 1 bis 5, **dadurch gekennzeichnet, dass** er einen im wesentlichen C-förmigen, resultierenden Grundriss (26) hat.

7. Werkzeughalter nach Anspruch 6, **dadurch gekennzeichnet, dass** die C-Form zwei modular aufgebaute Schenkel (27, 28) oder zwei Schenkelmodule (27, 28) und einen unter der Verformungskraft praktisch starren Bügelrücken (29) aufweist.

8. Werkzeughalter nach einem der Ansprüche 1 bis 7, **dadurch gekennzeichnet, dass** er einen im wesentlichen X-förmigen, resultierenden Grundriss (30) hat, wobei die Kreuzungsstelle (31) der X-Form (30) eine Lagerstelle (32) oder ein Gelenk (32) aufweist.

9. Werkzeughalter nach einem der Ansprüche 1 bis 8, **dadurch gekennzeichnet, dass** er als Schweißzange für eine Widerstands-Punktschweißanlage, insbesondere eine Roboterzange, Handzange oder Ständerzange, ausgebildet ist, und als Werkzeug zumindest eine Schweißelektrode (10, 11) trägt.

10. Werkzeughalter nach Anspruch 9, **dadurch gekennzeichnet, dass** ein Ultraschall-Sender (33) und ein Ultraschall-Empfänger (34) in Durchschallungsanordnung oder in Reflektionsanordnung, jeweils bezüglich der Punktschweißstelle (35), zur Schweißpunktbewertung und/oder zur Schweißregelung vorgesehen sind.

11. Werkzeughalter (1) nach einem der Ansprüche 1 bis 10, **dadurch gekennzeichnet, dass** die Fachwerkstruktur zwei oder mehrere übereinander angeordnete, praktisch deckungsgleiche Fachwerkebenen aufweist, die in Deckung und durch einen Zwischenraum in Normalenrichtung der Fachwerkebenen voneinander beabstandet sind.

12. Werkzeughalter (1) nach Anspruch 11, **dadurch gekennzeichnet, dass** durch den Zwischenraum, insbesondere zum Werkzeughaltebereich, Kabel oder Leitungen für elektrischen Strom und/oder Leitungen für ein Kühlfluid durchzuführen sind.

13. Werkzeughalter nach Anspruch 11 oder 12, **dadurch gekennzeichnet, dass** die Fachwerkebenen durch in einigen oder allen Knotenbereichen angeordnete Abstandsstifte miteinander verbunden sind.

14. Werkzeughalter nach einem der Ansprüche 11 bis 13, **dadurch gekennzeichnet, dass** eine Fachwerkebene oder beide Fachwerkebenen durch praktisch vollflächig ausgebildete Bleche abgedeckt und/oder gebildet sind.

15. Widerstands-Punktschweißanlage mit einem Werkzeughalter nach einem der Ansprüche 1 bis 14.

16. Verfahren zur Herstellung eines Werkzeughalters nach einem der Ansprüche 1 bis 14, **dadurch gekennzeichnet, dass** zumindest ein Modul, vorzugsweise ein Modul eines Zangenarmes, aus einem zusammenhängenden flächigen Werkstück einstückig ausgearbeitet und danach mit einem anderen Modul und eventuell mit. Basisabschnitten des Werkzeughalters verbunden wird.

## Claims

1. Tool holder (1), in particular for installations for joining processes using forming techniques, in particular clinching and punch-riveting, and thermal joining processes such as resistance spot welding, handling processes, embossing processes, screwing and press-fitting processes, which tool holder
- comprises, at least in some portions, a geometrical truss structure (2) with node regions (3, 4), in which strut elements (5, 6, 7) of the truss structure (2) are rigidly connected to one another,
- has a tool holding region (8, 9), which holds a tool (10, 11), which when operated has to be pressed against a workpiece (12) or the like with an operating force while elastically deforming the truss structure (2) of the tool holder (1); and
- comprises such a resultant truss structure (2) that, with respect to at least one node region (3, 4), at least one centre line (22, 23) or a portion of a centre line of a strut element (5, 6, 7) terminating in this node region (3, 4) is aligned off-centre with respect to the node region (3, 4) and/or the point of intersection (24, 25) of the centre lines (22, 23) or of portions of the centre lines (22, 23) of at least two strut elements (5, 6, 7) terminating in this node region (3, 4) is arranged off-centre with respect to the node region (3, 4), so that the structural, resultant off-centre alignment of the geometrical structural elements due to the torque distribution, in particular internal torque distribution, under the effect of the operating force influences the deformation of the resultant truss structure in the sense of a constant alignment of the tool holding region,
**characterized in that** the tool holder (1) comprises in at least one subregion (13, 14) of an elastically deformable region (15) of the truss structure (2) at least two modules (16, 17, 18, 19) that are rigidly connected to one another and possibly to base portions (20) of the tool holder (1), the tool holder (1) with the connected modules comprising the said resultant truss structure (2), and also at least one module (16 - 19) itself.

2. Tool holder according to Claim 1, **characterized in that** modules (16 - 19) are releasably connected to one another and/or a module (16 - 19) is releasably connected to base portions (20) of the tool holder (1), in particular screwed (21).

3. Tool holder according to Claim 1 or 2, **characterized in that** modules (16 - 19) are unreleasably connected to one another and/or a module (16 - 19) is unreleasably connected to base portions (20) of the tool holder (1), in particular integrally connected, in particular adhesively bonded, welded or soldered.

4. Tool holder according to one of Claims 1 to 3, **characterized in that** the tool holder (1) is formed together with the connected modules (16 - 19) almost as an intrinsically rigid unit.

5. Tool holder according to one of Claims 1 to 4, **characterized in that** a module (16 - 19) in interaction with another module (16 - 19) and possibly in interaction with, in particular non-modular, base portions (20) of the tool holder (1) provides the resultant truss structure (2) obtained according to Claim 1.

6. Tool holder according to one of Claims 1 to 5, **characterized in that** it has a substantially C-shaped, resultant outline (26).

7. Tool holder according to Claim 6, **characterized in that** the C shape has two modularly constructed legs (27, 28) or two leg modules (27, 28) and a clip back (29) that is virtually rigid under the deforming force.

8. Tool holder according to one of Claims 1 to 7, **characterized in that** it has a substantially X-shaped resultant outline (30), the crossing point (31) of the X shape (30) having a bearing point (32) or a joint (32).

9. Tool holder according to one of Claims 1 to 8, **characterized in that** it is formed as welding tongs for a resistance spot welding installation, in particular robot tongs, handheld tongs or pedestal tongs, and carries at least one welding electrode (10, 11) as a tool.

10. Tool holder according to Claim 9, **characterized in that** an ultrasonic transmitter (33) and an ultrasonic receiver (34) are provided in transmission arrangement or in reflection arrangement, in each case with respect to the spot welding point (35), for welding spot assessment and/or for welding control.

11. Tool holder (1) according to one of Claims 1 to 10, **characterized in that** the truss structure comprises two or more truss planes which are arranged one over the other, are virtually congruent and are superjacent and spaced apart from each other by an intermediate space in the direction normal to the truss planes.

12. Tool holder (1) according to Claim 11, **characterized in that** cables or lines for electrical power and/or lines for a cooling fluid can be led through the intermediate space, in particular to the tool holding region.

13. Tool holder according to Claim 11 or 12, **characterized in that** the truss planes are connected to each other by spacer pins arranged in some or all of the node regions.

14. Tool holder according to one of Claims 11 to 13, **characterized in that** one truss plane or both truss planes is/are covered and/or formed by metal sheets formed virtually over the full surface area.

15. Resistance spot welding installation with a tool holder according to one of Claims 1 to 14.

16. Method for producing a tool holder according to one of Claims 1 to 14, **characterized in that** at least one module, preferably a module of a tongs arm, is worked in one piece from a contiguous sheet-like workpiece and after that is connected to another module and possibly to base portions of the tool holder.

## Revendications

1. Porte-outil (1), en particulier pour des installations pour des processus d'assemblage par déformation, en particulier le clinchage et le rivetage par rivets auto-poinçonneurs, ainsi que pour des processus d'assemblage thermiques tels que le soudage par points par résistance, des processus de manipulation, des processus d'estampage, des processus de vissage et de pressage, qui
- présente au moins par sections une structure en treillis géométrique (2) dotée de régions d'intersection (3, 4) dans lesquelles des éléments de renfort (5, 6, 7) de la structure en treillis (2) sont reliés rigidement les uns aux autres,
- a une région de porte-outil (8, 9) qui porte un outil (10, 11) qui, lors du fonctionnement, doit être pressé à l'aide d'une force de fonctionnement contre une pièce (12) ou similaire avec déformation élastique de la structure en treillis (2) du porte-outil (1) et
- présente une structure en treillis (2) résultante telle que, par rapport à au moins une région d'intersection (3, 4), au moins une ligne centrale (22, 23) ou une section d'une ligne centrale d'un élément de renfort (5, 6, 7) débouchant dans cette région d'intersection (3, 4) est orientée de manière excentrique par rapport à la région d'intersection (3, 4) et/ou le point d'intersection (24, 25) des lignes centrales (22, 23) ou de sections des lignes centrales (22, 23) d'au moins deux éléments de renfort (5, 6, 7) débouchant dans cette région d'intersection (3, 4) est disposé de manière excentrique par rapport à la région d'intersection (3, 4), de telle sorte que l'orientation structurale excentrique résultante des éléments structuraux géométriques influence, par répartition, en particulier interne, des moments sous l'action de la force de fonctionnement, la déformation de la structure en treillis résultante au sens d'une orientation constante de la région de porte-outil, **caractérisé en ce que** le porte-outil (1) comprend, dans au moins une région partielle (13, 14) d'une région (15) devant être déformée élastiquement de la structure en treillis (2), au moins deux modules (16, 17, 18, 19) reliés rigidement les uns aux autres et éventuellement à des sections de base (20) du porte-outil (1), le porte-outil (1) doté des modules reliés comprenant la structure en treillis (2) résultante susmentionnée ainsi qu'au moins un module (16 - 19) lui-même.

2. Porte-outil selon la revendication 1, **caractérisé en ce que** des modules (16 - 19) sont reliés les uns aux autres de manière amovible et/ou un module (16 - 19) est relié de manière amovible à des sections de base (20) du porte-outil (1), en particulier vissé (21) sur ces dernières.

3. Porte-outil selon la revendication 1 ou 2, **caractérisé en ce que** des modules (16 - 19) sont reliés les uns aux autres de manière non amovible et/ou un module (16 - 19) est relié de manière non amovible à des sections de base (20) du porte-outil (1), en particulier relié par liaison de matière à ces dernières, en particulier collé, soudé ou brasé sur celles-ci.

4. Porte-outil selon l'une quelconque des revendications 1 à 3, **caractérisé en ce que** le porte-outil (1) doté des modules (16 - 19) reliés est réalisé dans l'ensemble pratiquement de manière intrinsèquement rigide.

5. Porte-outil selon l'une quelconque des revendications 1 à 4, **caractérisé en ce qu'**un module (16 - 19) permet d'obtenir, en coopération avec un autre module (16 - 19) et éventuellement en coopération avec des sections de base (20) en particulier non modulaires du porte-outil (1), la structure en treillis (2) résultante selon la revendication 1.

6. Porte-outil selon l'une quelconque des revendications 1 à 5, **caractérisé en ce qu'**il a une projection sur un plan horizontal (26) résultante essentiellement en forme de C.

7. Porte-outil selon la revendication 6, **caractérisé en ce que** la forme en C présente deux branches (27, 28) conçues de manière modulaire ou deux modules de branche (27, 28) et un dos d'étrier (29) pratiquement rigide lors de l'application de la force de déformation.

8. Porte-outil selon l'une quelconque des revendications 1 à 7, **caractérisé en ce qu'**il a une projection sur un plan horizontal (30) résultante essentiellement en forme de X, le point d'intersection (31) de la forme en X (30) comprenant un point de pivotement (32) ou une articulation (32).

9. Porte-outil selon l'une quelconque des revendications 1 à 8, **caractérisé en ce qu'**il est réalisé sous forme de pince porte-électrode pour une installation de soudage par points par résistance, en particulier sous forme de pince robot, de pince manuelle ou de pince-support, et porte en tant qu'outil au moins une électrode de soudage (10, 11).

10. Porte-outil selon la revendication 9, **caractérisé en ce qu'**un émetteur d'ultrasons (33) et un récepteur d'ultrasons (34) sont prévus en agencement de transmission ou en agencement de réflexion, à chaque fois par rapport à l'emplacement de soudage par points (35), en vue de l'évaluation du point de soudage et/ou en vue de la commande du soudage.

11. Porte-outil (1) selon l'une quelconque des revendications 1 à 10, **caractérisé en ce que** la structure en treillis présente deux ou plus de deux plans de structure en treillis pratiquement en coïncidence et disposés de manière superposée qui sont en coïncidence et espacés les uns des autres par un espace intermédiaire dans la direction normale des plans de structure en treillis.

12. Porte-outil (1) selon la revendication 11, **caractérisé en ce que** des câbles ou des lignes pour le courant électrique et/ou des conduites pour un fluide de refroidissement doivent être guidés à travers l'espace intermédiaire, en particulier jusqu'à la région de porte-outil.

13. Porte-outil selon la revendication 11 ou 12, **caractérisé en ce que** les plans de structure en treillis sont reliés les uns aux autres par des goupilles d'écartement disposées dans certaines régions d'intersection ou dans toutes celles-ci.

14. Porte-outil selon l'une quelconque des revendications 11 à 13, **caractérisé en ce qu'**un plan de structure en treillis ou les deux plans de structure en treillis sont recouverts et/ou formés par des tôles réalisées pratiquement sur toute la surface.

15. Installation de soudage par points par résistance comprenant un porte-outil selon l'une quelconque des revendications 1 à 14.

16. Procédé de fabrication d'un porte-outil selon l'une quelconque des revendications 1 à 14, **caractérisé en ce qu'**au moins un module, de préférence un module d'un bras de pince, est élaboré d'une seule pièce à partir d'une pièce plane d'un seul tenant et ensuite relié à un autre module et éventuellement à des sections de base du porte-outil.
